(19) Europäisches Patentamt
European Patent Office
Office européen des brevets

(11) **EP 3 815 842 B1**

(12) **EUROPEAN PATENT SPECIFICATION**

(45) Date of publication and mention
of the grant of the patent:
**01.06.2022 Bulletin 2022/22**

(51) International Patent Classification (IPC):
**B24B 5/04** (2006.01) **B24B 49/14** (2006.01)
**G06N 5/00** (2006.01) **B24B 55/02** (2006.01)
**B24B 49/16** (2006.01) **G06N 20/20** (2019.01)

(21) Application number: **20204366.7**

(22) Date of filing: **28.10.2020**

(52) Cooperative Patent Classification (CPC):
**B24B 5/04; G06N 5/003; G06N 20/20; B24B 49/14;
B24B 55/02**

(54) **GRINDING SYSTEM**

**SCHLEIFSYSTEM**

**SYSTÈME DE POLISSAGE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2019 JP 2019200055
12.11.2019 JP 2019204672
12.11.2019 JP 2019204673**

(43) Date of publication of application:
**05.05.2021 Bulletin 2021/18**

(73) Proprietor: **JTEKT CORPORATION
Aichi-ken, 448-8652 (JP)**

(72) Inventors:
• **SHIBATA, Hiroyuki
Osaka-shi,, Osaka 542-8502 (JP)**
• **MORITA, Hiroshi
Osaka-shi,, Osaka 542-8502 (JP)**
• **MURAO, Takuya
Osaka-shi,, Osaka 542-8502 (JP)**
• **YONEZU, Toshihiro
Osaka-shi,, Osaka 542-8502 (JP)**

• **ISHIGURE, Yuki
Osaka-shi,, Osaka 542-8502 (JP)**
• **SAEKI, Yuya
Okazaki-shi,, Aichi 444-3594 (JP)**

(74) Representative: **TBK
Bavariaring 4-6
80336 München (DE)**

(56) References cited:
**JP-A- 2010 194 641     US-A1- 2019 324 431**

• **Arul S N ET AL: "Slcon'01 Sensors for Industry
Conference On-line Detection of Grinding Burn
by Integrated Sensing", , 7 November 2001
(2001-11-07), pages 89-94, XP055784531,
Retrieved from the Internet:
URL:https://ieeexplore.ieee.org/stampPDF/g
etPDF.jsp?tp=&arnumber=968505&ref=aHR0cH
M6
Ly9pZWVleHBsb3JlLmllZWUub3JnL2RvY3VtZ
W50Lz k2ODUwNQ== [retrieved on 2021-03-11]**

## Description

Technical Field

The present disclosure relates to a grinding system.

Background Art

In the related art, a grinding device is known, which grinds a workpiece with a rotationally-driven grinding wheel (for example, see JP2010-194641A (PTL 1)).

The grinding device described in PTL 1 includes a workpiece which is rotationally driven, a grinding wheel for grinding an outer peripheral surface of the workpiece, a coolant nozzle for supplying a coolant to a vicinity of a grinding point of the workpiece, and a grinding burn determination unit for determining a grinding burn of the workpiece. The grinding burn determination unit determines the presence or absence of a grinding burn based on information output from a power meter of a motor that rotationally drives the grinding wheel and a measurement value of a temperature sensor that measures the temperature of the workpiece. The temperature sensor is in contact with a position on the outer peripheral surface of the workpiece that is symmetrical with respect to the grinding point, and measures the surface temperature of the portion.

Citation List

Patent Literature

[PTL 1]JP2010-194641A

Summary of Invention

Technical Problem

In the grinding device described in PTL 1, since the temperature sensor is in contact with the surface of the workpiece, when the coolant adheres onto the surface of the workpiece with which the temperature sensor is in contact, there may be cases where it may be difficult to measure the surface temperature of the workpiece with high accuracy, and thus, there is still room for improvement in the accuracy of determining a grinding burn.

Accordingly, an objective of the present invention is to provide a grinding system capable of improving the accuracy of determining a grinding burn of a workpiece.

Solution to Problem

The invention is defined in claim 1. A grinding system according to the present invention includes a grinding wheel that grinds a workpiece, a drive mechanism that rotationally drives the grinding wheel, a moving mechanism that relatively moves the workpiece and the grinding wheel, a controller that controls the drive mechanism and the moving mechanism, and an operation unit that determines the occurrence of a grinding burn on the workpiece based on a measurement value of a heat flow sensor that measures a heat flow radiated from the surface of at least one of the grinding wheel and the workpiece as the heat is generated at the grinding point where the grinding wheel comes into contact with the workpiece.

According to the grinding system of the present invention, it is possible to improve the accuracy of determining the grinding burn of the workpiece.

Brief Description of Drawings

Fig. 1 is an explanatory diagram showing an overall configuration of a grinding system according to a first example.
Fig. 2A is a schematic diagram showing a configuration of a grinding system when viewed along a rotation axis direction of a grinding wheel.
Fig. 2B is a schematic diagram showing a configuration of the grinding system when viewed from the grinding wheel side, which is the direction in which the grinding wheel and the workpiece are arranged.
Fig. 3 is a perspective view showing a configuration of a grinding wheel, a workpiece, and a heat flow sensor.
Fig. 4 is an example of a graph showing a relationship between a heat flow measured by a heat flow sensor and a grinding efficiency in a test for determining a threshold value.
Fig. 5A is an explanatory diagram showing a state in which a heat flow penetrates a heat flow sensor.
Fig. 5B is an explanatory diagram showing a configuration of the heat flow sensor.
Fig. 6 is an explanatory diagram showing a configuration of a grinding system according to a second example.
Fig. 7 is a perspective view showing a configuration of a grinding wheel, a workpiece, and a heat flow sensor according to the second example.
Fig. 8 is an explanatory diagram showing a position of a heat flow sensor when a grinding system according to a third example is viewed along an X-axis direction.
Fig. 9 is a diagram showing a configuration of a grinding system according to a fourth example.
Fig. 10 is a plan view showing a grinder.
Fig. 11 is a diagram showing an arrangement of a grinding wheel, a workpiece, and a heat flow sensor, which is an enlarged view of the grinding wheel and the workpiece viewed from an axial direction.
Fig. 12 is a diagram showing a configuration of function blocks of the grinding system of the fourth example.

Fig. 13 is a diagram showing a relationship among types of machining state data, types of prediction targets, and learned models.

Fig. 14 is a diagram showing a degree of influence on the grinding burn state according to the types of the machining state data.

Fig. 15 is a graph showing heat flow data measured by a heat flow sensor and vibration data generated on a support shaft of a grinding wheel.

Fig. 16 is a diagram showing a configuration of function blocks of a grinding system of a fifth example.

Fig. 17 is a graph showing a relationship between heat flow data (heat flux) by the heat flow sensor and a grinding burn depth.

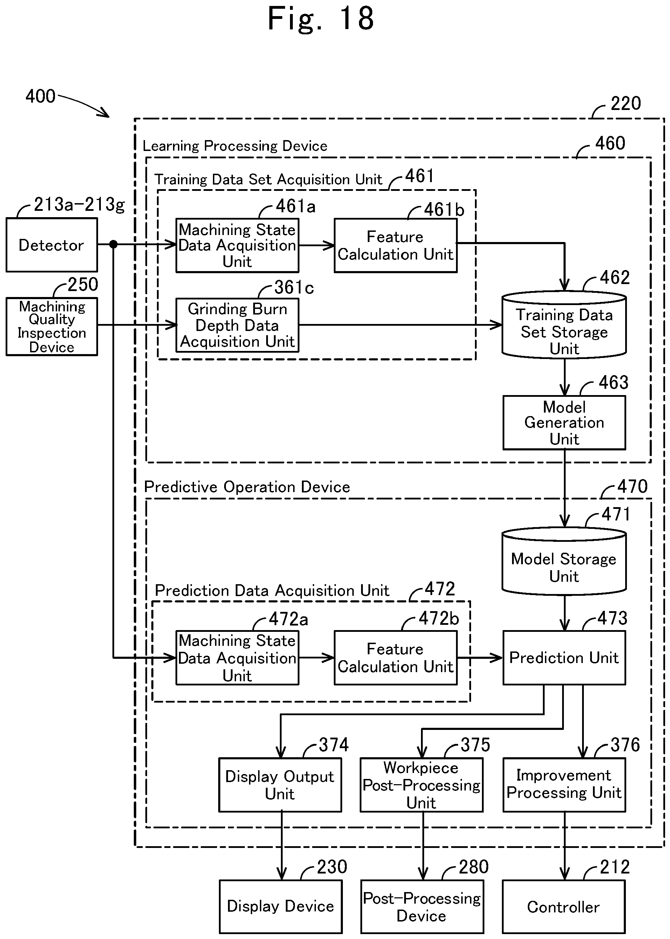

Fig. 18 is a diagram showing a configuration of function blocks of a grinding system of a seventh example.

Description of Embodiments

(1. First Example)

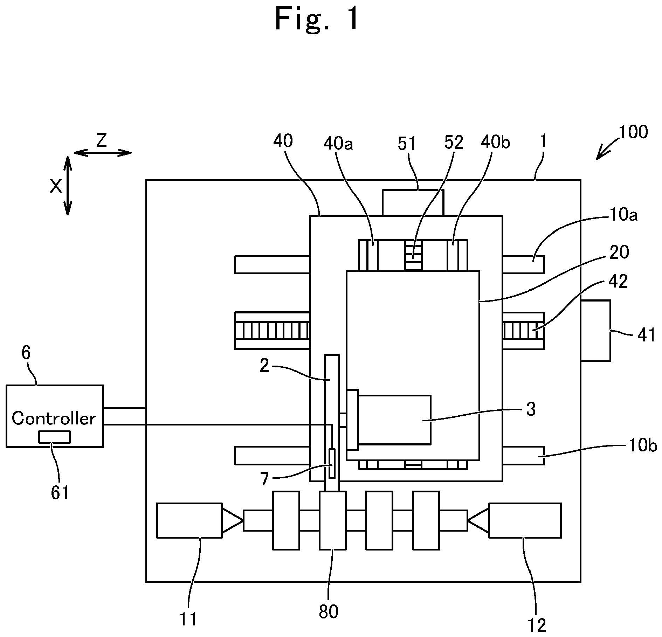

A grinding system 100 of the first example will be described with reference to Figs. 1 to 5B.

(1-1. Configuration of Grinding System 100)

Fig. 1 is an explanatory diagram showing an overall configuration of the grinding system 100 according to the first example. In this example, the case where the grinding system 100 is formed of one grinder is described as an example. However, the grinding system 100 may be formed of a plurality of grinders, or may be provided with an operation device or the like separate from the grinders.

As shown in Fig. 1, the grinding system 100 includes the grinder. In this example, the grinder is a machine tool for grinding a workpiece. For the grinder, a grinder of various configurations such as a cylindrical grinder, a cam grinder, or the like may be applied. In this example, for the grinder, a grinding table traverse type of cylindrical grinder is described as an example. However, for the grinder, a work table traverse type may also be applied.

The grinding system 100 includes a bed 1 as a base, a disk-like grinding wheel 2 that grinds a shaft-like workpiece 80, an electric motor 3 for a grinding wheel serving as a drive mechanism that rotationally drives the grinding wheel 2, a Z-axis motor 41 and an X-axis motor 51 that generate a moving force for relatively moving the grinding wheel 2 with respect to the workpiece 80, and a controller 6 that controls the electric motor 3 for the grinding wheel, the Z-axis motor 41, and the X-axis motor 51.

The bed 1 is provided with Z-axis guide rails 10a and 10b extending in the Z-axis direction, and a Z-axis table 40 is installed on the Z-axis guide rails 10a and 10b. The Z-axis table 40 is moved in the Z-axis direction by a Z-axis ball screw 42 provided on the bed 1, and slid on the Z-axis guide rails 10a and 10b. The Z-axis ball screw 42 is driven by the Z-axis motor 41 installed in the bed 1. The electric motor 3 for the grinding wheel is attached to an X-axis table 20 installed on the Z-axis table 40.

The X-axis table 20 is installed on the X-axis guide rails 40a and 40b extending in the X-axis direction in the Z-axis table 40. In addition, the X-axis table 20 is moved in the X-axis direction by the X-axis ball screw 52 provided on the Z-axis table 40, and slid on the X-axis guide rails 40a and 40b. The X-axis ball screw 52 is driven by an X-axis motor 51 arranged on the Z-axis table 40. The Z-axis motor 41, the X-axis motor 51, the Z-axis ball screw 42, and the X-axis ball screw 52 form a moving mechanism that relatively moves the workpiece 80 and the grinding wheel 2.

Both ends of the workpiece 80 in the axial direction are supported by spindle stocks 11 and 12 installed on the bed 1, and rotationally driven by the motors incorporated in the spindle stocks 11 and 12.

The grinding system 100 further includes a heat flow sensor 7 that measures a heat flow radiated from the surface of at least one of the grinding wheel 2 and the workpiece 80 as the heat is generated at the grinding point where the grinding wheel 2 contacts the workpiece 80. In this example, when the grinding system 100 is viewed along the direction perpendicular to the XZ plane, the heat flow sensor 7 is provided at a position overlapping with the grinding wheel 2. The heat flow sensor 7 is electrically connected to the controller 6, and the controller 6 may acquire the measurement value of the heat flow sensor 7.

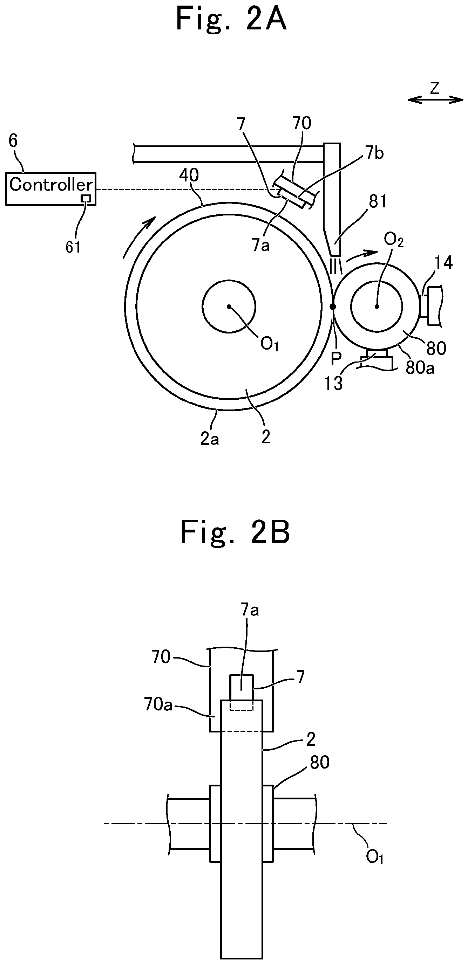

Fig. 2A is a schematic diagram showing a configuration of the grinding system 100 when viewed along a rotation axis O1 direction (Z direction in Fig. 1) of the grinding wheel 2, and Fig. 2B is a schematic diagram showing a configuration of the grinding system 100 when viewed from the grinding wheel 2 side, which is the direction (X direction in Fig. 1) in which the grinding wheel 2 and the workpiece 80 are arranged. In Fig. 2A, the rotational directions of the grinding wheel 2 and the workpiece 80 are indicated by arrows. In the following description, "upper" and "lower" mean the upper and lower sides in the vertical direction.

As shown in Fig. 2A, the grinding system 100 grinds the workpiece 80 while supplying a coolant from a coolant nozzle 81 to a grinding point P. In this example, the grinding point P refers to a point on an outer peripheral surface of the workpiece 80 that is ground by the grinding wheel 2. The coolant nozzle 81 is arranged near the grinding point P and is located above the grinding point P.

The workpiece 80 is rotatably supported by first and second shoes 13 and 14 in contact with an outer peripheral surface 80a thereof. A tip of the first shoe 13 comes into contact with the outer peripheral surface 80a of the workpiece 80 located below the grinding point P. A tip of the second shoe 14 comes into contact with the outer peripheral surface 80a of the workpiece 80 at a position symmetrical with the grinding point P with respect to the rotation axis O2 of the workpiece 80.

The heat flow sensor 7 formed of a flexible substrate has a thin flat plate shape, and is provided at a position where its measurement surface 7a faces an outer peripheral surface 2a of the grinding wheel 2 and is located above the tip of the coolant nozzle 81. A back surface 7b of the heat flow sensor 7, which is opposite to the measurement surface 7a, is attached to a surface of a metal plate 70 inclined with respect to the Z-axis direction so as to be in contact therewith. The distance between the measurement surface 7a of the heat flow sensor 7 and the outer peripheral surface 2a of the grinding wheel 2 along a radius direction of the grinding wheel 2 is 40 mm to 60 mm, for example.

As shown in Fig. 2B, when viewed in the X-axis direction, the mounting position for the heat flow sensor 7 in the Z-axis direction is a position where at least a portion of the measurement surface 7a overlaps with the grinding wheel 2. The position of the heat flow sensor 7 in the direction of the rotation axis O1 of the grinding wheel 2 is not limited to the above, and for example, when viewed in the X-axis direction, it may be a position where the measurement surface 7a of the heat flow sensor 7 and the grinding wheel 2 do not overlap with each other.

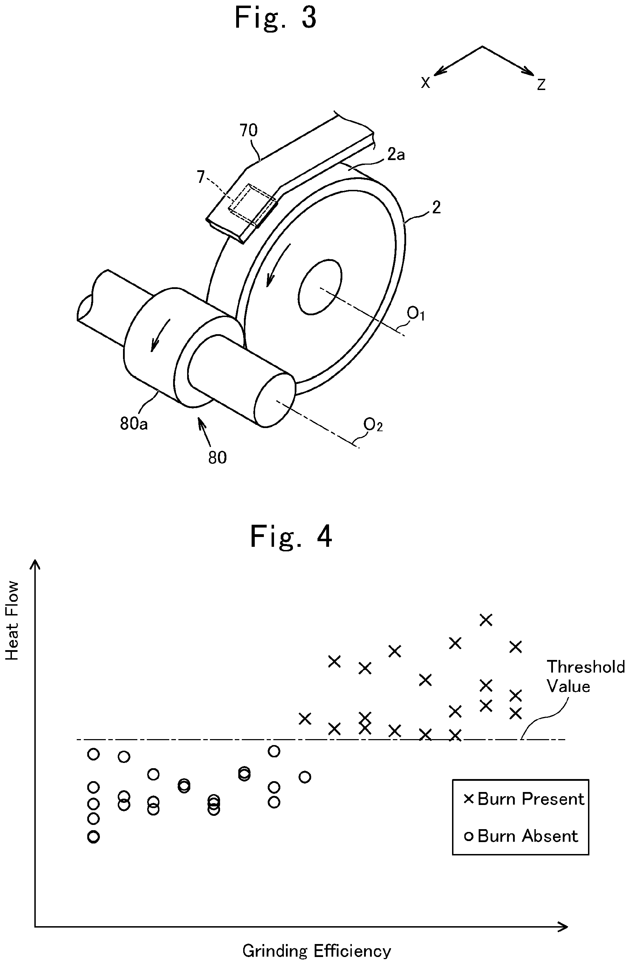

Fig. 3 is a perspective view showing a configuration of the grinding wheel 2, the workpiece 80, and the heat flow sensor 7. In Fig. 3, the heat flow sensor 7 is indicated by a dashed line. As shown in Fig. 3, the metal plate 70 is arranged so as to cover the outer peripheral surface 2a of the grinding wheel 2 from above. In order to enhance the flow of the heat flow passing through the heat flow sensor 7, it is desirable that the material of the metal plate 70 has a high thermal conductivity.

The heat flow sensor 7 measures a heat flow emitted from the grinding point P, and a heat flow emitted from the outer peripheral surface 2a due to the heat conducted from the grinding point P to the inside of the grinding wheel 2. Here, since the heat generated at the grinding point P is transferred to the grinding wheel 2 and the workpiece 80, the heat remains even when the surface of the grinding wheel 2 and the workpiece 80 are moved to positions different from the grinding point P. Accordingly, even at a position different from the grinding point P on the surface of at least one of the grinding wheel 2 and the workpiece 80, the remaining heat is released. That is, in this example, since heat is remaining on the surface of the grinding wheel 2 due to generation of the heat at the grinding point P, the heat flow sensor 7 also measures the heat flow radiated from the surface of the grinding wheel 2 located near the heat flow sensor 7.

The grinding system 100 includes an operation unit 61 that determines the presence or absence of a grinding burn based on the heat flow measured by the heat flow sensor 7. In this example, a configuration in which the controller 6 includes some of the functions of the operation unit 61 will be described as an example.

However, the operation unit 61 may be configured as a device independent from the controller 6.

More specifically, the operation unit 61 determines that the grinding burn occurs when the heat flow based on the output value of the heat flow sensor 7 is greater than a predetermined threshold value. This threshold may be obtained in advance by a test. The test involves, for example, with a coolant supply maintained at a constant amount for the same grinding target, measuring the heat flow while changing the grinding efficiency (amount of grinding per unit time and unit width) and plotting the presence or absence of a grinding burn.

Fig. 4 is an example of a graph showing the relationship between the heat flow measured by the heat flow sensor 7 and the grinding efficiency, when the above test is carried out. As shown in Fig. 4, it may be seen that as the grinding efficiency is increased, the heat flow also increases, and grinding burn occurs. The operation unit 61 is set such that, when the measurement value output from the heat flow sensor 7 exceeds the threshold value, it automatically changes to optimize the grinding conditions such as the feed speed of the grinding wheel 2 and the rotation speed of the workpiece 80. Note that, in the above description, the threshold value is determined based on the data obtained in the test performed in advance, but embodiments are not limited thereto, and for example, the threshold value may be determined based on the data obtained during grinding.

(1-2. Principle of Heat Flow Sensor 7)

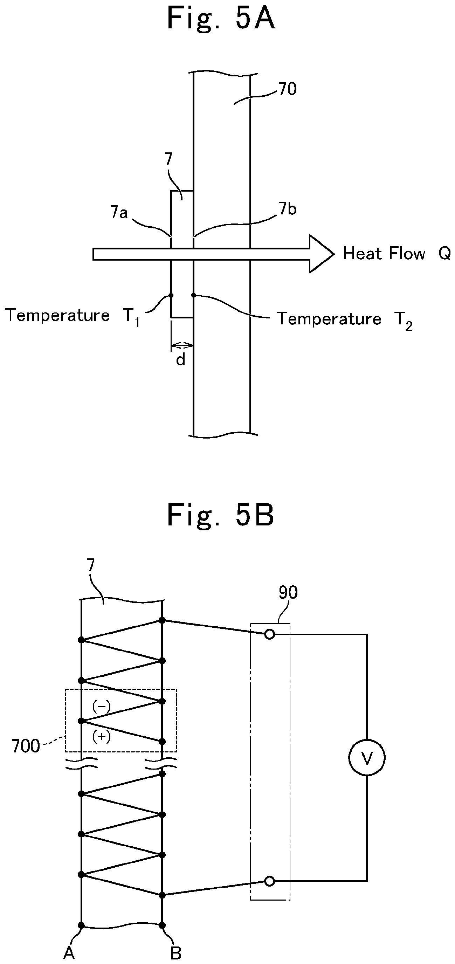

Figs. 5A and 5B are explanatory views for explaining the principle of the heat flow sensor 7, in which Fig. 5A is an explanatory diagram showing a state in which the heat flow penetrates the heat flow sensor 7, and Fig. 5B is an explanatory diagram showing the configuration of the heat flow sensor 7.

As shown in Fig. 5A, when it is assumed that the thickness of the heat flow sensor 7 is d, the temperature of the measurement surface 7a is T1, the temperature of the back surface 7b opposite to the measurement surface 7a is T2, and the thermal conductivity of the heat flow sensor 7 is $\lambda$, then the heat flow Q passing through the heat flow sensor 7 is obtained by the following equation (1).

$$Q = (T1 - T2) \lambda/d \dots (1)$$

That is, the heat flow sensor 7 measures the heat flow Q passing through the heat flow sensor 7 by the voltage generated due to the temperature difference between the measurement surface 7a and the back surface 7b of the heat flow sensor 7.

As shown in Fig. 5B, in the heat flow sensor 7, a plurality of thermocouples 700 are connected in series to measurement points A and B at multiple points, and, among these thermocouples, the contact points of a thermocouple at one end and of a thermocouple at the other end are connected to a measuring instrument terminal 90, respectively. Since the plurality of thermocouples 700 are connected in series, the output voltage caused by the temperature difference between the measurement points A and B is amplified. As a result, the sensitivity of the heat flow sensor 7 is increased, thereby enabling highly accurate measurement.

In this example, the operation unit 61 determines the grinding burn at the grinding point P based on the measurement value of the heat flow sensor 7 having high sensitivity, so that the grinding burn may be measured with high accuracy.

(1-3. Grinding Method)

The grinding system 100 according to this example is used in a grinding method described below, and which is not part of the present invention. The grinding method according to this example includes a determination step of determining the grinding burn of the workpiece 80, a measuring step of measuring a grinding burn depth in the workpiece 80, and a changing step of changing the grinding conditions of the grinding system 100 based on the grinding burn depth measured in the measuring step.

As described above, the determination step is a step in which the operation unit 61 determines the grinding burn based on the measurement value of the heat flow sensor 7. In the measuring step, the depth of the grinding burn of the workpiece 80 determined as having the grinding burn in the determining step is measured. This measurement is performed by visual inspection by the worker, for example. Further, in the measuring step, the operation unit 61 may measure (predict) the depth of the grinding burn based on the measurement value of the heat flow sensor 7.

In the changing step, the grinding conditions are changed based on the depth of the grinding burn measured in the measuring step. For example, when the grinding burn depth is greater than a predetermined value, the controller 6 may set the grinding condition such that the grinding burn depth is reduced. Note that the grinding conditions include the feed speed of the grinding wheel 2, the grinding efficiency, the rotation speed of the workpiece 80 and the like, for example. In the changing step, for example, the relationship between the grinding burn depth and the heat flow measured by the heat flow sensor 7 may be converted into data, and the grinding burn depth of the workpiece 80 may be estimated based on this data.

As described above, the operation unit 61 determines the occurrence of a grinding burn on the workpiece 80 based on the measurement value of the heat flow sensor 7 that measures the heat flow radiated from the surface of at least one of the grinding wheel 2 and the workpiece 80 as the heat is generated at the grinding point P where the grinding wheel 2 comes into contact with the workpiece 80.

According to this example, since the grinding burn is determined based on the measurement value of the heat flow sensor 7, the heat, which is caused by the heat generation at the grinding point P, may be measured with higher accuracy than in the case in which a temperature sensor such as a thermistor is used, for example. That is, the accuracy of determining the grinding burn of the workpiece 80 may be enhanced.

Note that, although the heat flow sensor 7 has a flat plate shape in the above description, it may be curved in an arc shape along the outer peripheral surface of the grinding wheel 2 and attached thereto, for example.

In the above description, the grinding system 100 may include a cooling unit that maintains the temperature of the metal plate 70 constant by cooling the metal plate 70. As a result, the temperature rise of the metal plate 70 may be prevented, and the measurement error due to the temperature rise of the back surface 7b of the heat flow sensor 7 may be prevented.

(2. Second Example)

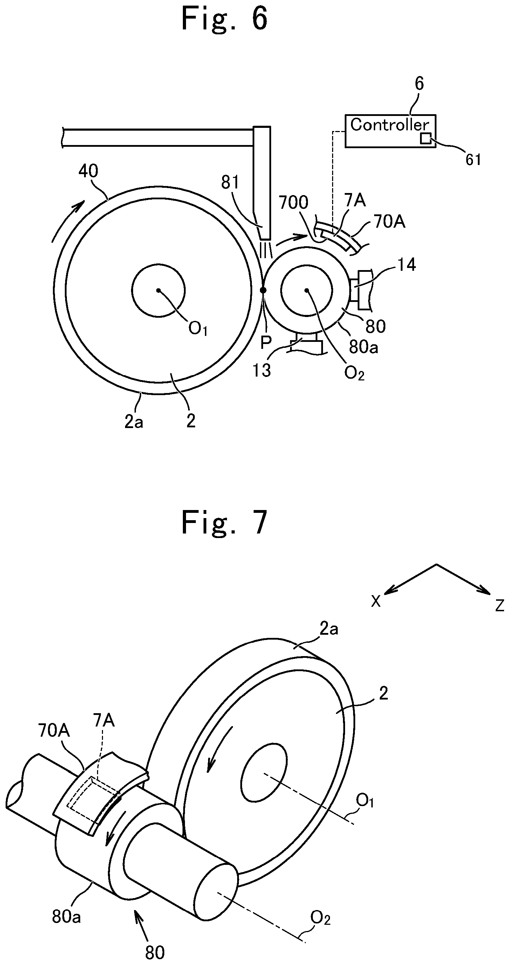

Next, the grinding system 100 according to the second example will be described with reference to Figs. 6 and 7. Fig. 6 is an explanatory diagram showing a configuration example when the grinding system 100 according to the second example is viewed along the direction of the rotation axis O1 of the grinding wheel 2. Fig. 7 is a perspective view showing the configuration of the grinding wheel 2, the workpiece 80, and a heat flow sensor 7A according to the second example.

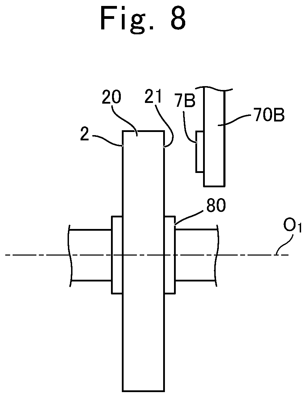

As shown in Figs. 7 and 8, the grinding system 100 according to the second example is different from the grinding system 100 according to the first example in the position of the heat flow sensor 7A. As shown in Fig. 6, in the grinding system 100 according to the second example, the heat flow sensor 7A is provided at a position facing the outer peripheral surface 80a of the workpiece 80.

Like the first example, the heat flow sensor 7A is formed of a flexible substrate and may be bent along a curved surface. In this example, the metal plate 70A is curved in an arc shape along the circumferential direction of the workpiece 80, and the heat flow sensor 7A is also curved along the curved surface of the metal plate 70A and attached thereto. That is, the heat flow sensor 7A is attached so as to form an arc along the circumferential direction of the workpiece 80.

The heat flow sensor 7A measures a heat flow emitted from the grinding point P and a heat flow emitted from the outer peripheral surface 80a due to the heat conducted from the grinding point P to the inside of the workpiece 80. Further, due to the heat generated at the grinding point P, heat remains on the surface of the workpiece 80. Therefore, the heat remaining on the surface is released from the surface of the workpiece 80 located near the heat flow sensor 7A, and the heat flow sensor 7A measures the heat flow radiated from the surface.

Likewise, according to the second example, the operation unit 61 determines the grinding burn based on the measurement value of the heat flow sensor 7A, so that the same operation and effect as in the first example may be obtained.

As a modification of the second example, the heat flow sensor 7A may be arranged so as to face the outer peripheral surface 80a of the workpiece 80 between the first shoe in contact with the outer peripheral surface 80a of the workpiece 80 located below the grinding point P, and the second shoe in contact with the outer peripheral surface 80a of the workpiece 80 on the side opposite to the coolant nozzle 81 with respect to the rotation axis O2.

(3. Third Example)

Next, the grinding system 100 according to the third example will be described with reference to Fig. 8. Fig. 8 is an explanatory diagram showing a position of a heat flow sensor 7B when the grinding system 100 according to the third example is viewed along the X-axis direction.

As shown in Fig. 8, the grinding system 100 according to the third example is different from the grinding system 100 according to the first example in the position of the heat flow sensor 7B. In the grinding system 100 according to the third example, the heat flow sensor 7B is provided at a position facing an axial end surface 21 in the rotation axis O1 direction of the grinding wheel 2. That is, the measurement surface of the heat flow sensor 7B and the axial end surface 21 of the grinding wheel 2 face each other. The heat flow sensor 7B is attached to a flat metal plate 70B arranged near the grinding wheel 2.

Likewise, according to the third example, the same operation and effect as in the first example may be obtained.

(4. Fourth Example)

(4-1. Configuration of Grinding System 200)

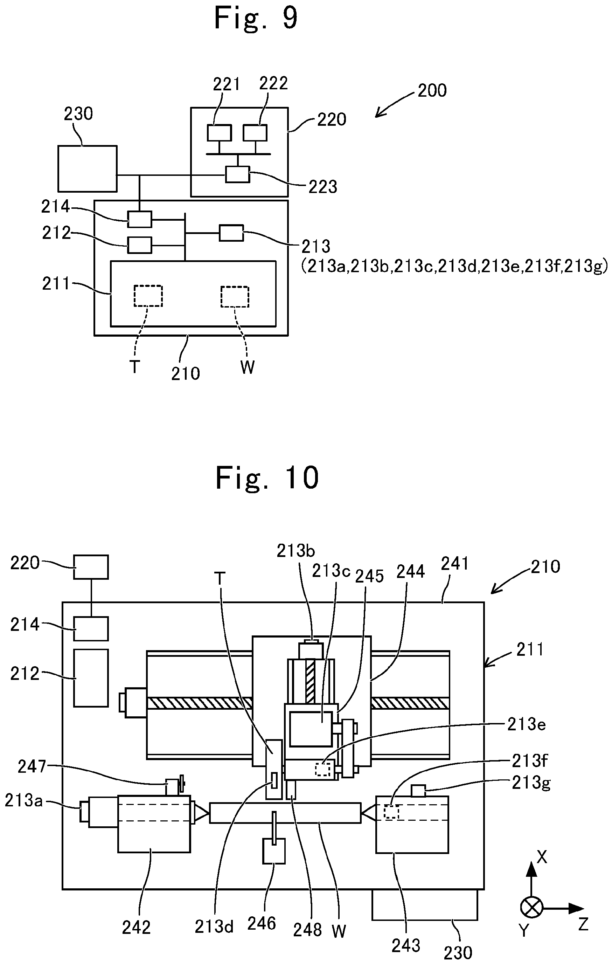

The hardware configuration of the grinding system 200 will be described with reference to Fig. 9. The grinding system 200 includes at least one grinder 210 and one operation device 220 (corresponding to the operation unit). The grinder 210 may be a single unit or a plurality of units. In this example, the case in which the grinding system 200 is provided with one grinder 210 is described as an example. In this example, the grinding system 200 further includes a display device 230.

The grinder 210 includes at least a grinder main body 211 for grinding the workpiece W using the grinding wheel T, a controller 212, a detector 213, and an interface 214. The grinder main body 211 includes the grinding wheel T, supports the workpiece W, and is configured to relatively move the grinding wheel T and the workpiece W. The grinder main body 211 grinds the workpiece W using the grinding wheel T. The grinder main body 211 is a part that includes the bed 1, the grinding wheel 2, the drive mechanism (3), and the moving mechanism (41, 51, 42, 52) in the grinding system 100 of the first example.

The controller 212 controls the grinder main body 211. The controller 212 includes a CNC device, a PLC device, and the like, for example. The detector 213 detects observable machining state data in the grinder main body 211 during grinding of the workpiece W. The detector 213 includes at least a heat flow sensor (corresponding to the heat flow sensors 7, 7A, and 7B in the first to third examples). The interface 214 is a device that enables the grinder main body 211, the controller 212, and the detector 213 to communicate with the outside.

The operation device 220 predicts a machining quality of the workpiece W by applying machine learning using the machining state data measured by the detector 213. In particular, the operation device 220 predicts the grinding burn state as the machining quality of the workpiece W. Further, the operation device 220 may also predict chattering state, roundness, and surface roughness as the machining quality of the workpiece W.

The operation device 220 is arranged at a position close to the grinder 210 and serves as a so-called edge computer. That is, in this example, the operation device 220 is configured as a separate device independent from the controller 212. The operation device 220 includes a processor 221, a storage device 222, an interface 223, and the like. The operation device 220 is communicatively connected to the grinder 210.

(4-2. Example of Grinder 210)

As an example of the grinder 210, a cylindrical grinder will be described with reference to Fig. 10. The grinder 210 includes the grinder main body 211, the controller 212, the detector 213, and the interface 214 (shown in Fig. 9). The grinder main body 211 mainly includes a bed 241, spindle stocks 242 and 243, a Z-axis table 244, an X-axis table 245, a grinding wheel T, a measuring unit 246, a grinding wheel correction unit 247, and a coolant nozzle 248. In the following description, the description of the configurations already described with respect to the first example will be omitted.

The measuring unit 246 measures the size (diameter) of the workpiece W. The grinding wheel correction unit 247 corrects the shape of the grinding wheel T. The grinding wheel correction unit 247 is a device for truing (including dressing) the grinding wheel T. Further, the grinding wheel correction unit 247 also has a function of measuring the size (diameter) of the grinding wheel T.

In this example, the truing is a reshaping work such as a work for forming the grinding wheel T according to the shape of the workpiece W when the grinding wheel T is worn by grinding, a work for removing the runout of the grinding wheel T due to uneven wear, and the like.

The dressing is a dressing (dressing) work such as an operation of adjusting the protrusion amount of abrasive grains and sharpening cutting edges of abrasive grains. The dressing is a work for correcting dulling, clogging, spilling, and the like, and is usually performed after truing. However, since the truing and the dressing may be performed without special distinction, this will be referred to as truing herein and understood in the meaning including dressing.

The coolant nozzle 248 is provided near the grinding wheel T of the X-axis table 245. The coolant nozzle 248 supplies the coolant to the grinding point of the workpiece W by the grinding wheel T. The coolant supplied from the coolant nozzle 248 to the grinding point is collected, cooled to a predetermined temperature, and supplied again from the coolant nozzle 248 to the grinding point.

The controller 212 controls each drive device based on the NC program generated based on the operation command data such as the shape of the workpiece W, the machining conditions, the shape of the grinding wheel T, and the coolant supply timing information. That is, the controller 212 inputs the operation command data, generates an NC program based on the operation command data, and controls each motor, the coolant device (not shown), and the like based on the NC program, thereby performing grinding of the workpiece W. In particular, the controller 212 performs grinding based on the outer diameter of the workpiece W measured by the measuring unit 246 until the workpiece W has a finished shape. Further, the controller 212 corrects (truing and dressing) the grinding wheel T by controlling each motor and the grinding wheel correction unit 247 at the timing of correcting the grinding wheel T.

Further, the grinder 210 includes a plurality of detectors 213a to 213g that measure observable machining state data of the grinder main body 211 during grinding of the workpiece W. However, the grinder 210 may include at least the detector 213d, which is a heat flow sensor, among the plurality of detectors 213a to 213g.

The detector 213a is a rotational power sensor that measures, as the machining state data, the rotational power data of a motor that rotationally drives the workpiece W. The detector 213b is a shaft power sensor that measures, as the machining state data, the shaft power data for moving the X-axis table 245 in the X-axis direction. The detector 213c is a rotational power sensor that measures, as the machining state data, the rotational power data of a motor that rotationally drives the grinding wheel T.

The detector 213d is a heat flow sensor that measures, as the machining state data, the heat flow data radiated from a position different from the grinding point on the surface of at least one of the grinding wheel T and the workpiece W. In this example, the case in which the detector 213d serving as the heat flow sensor is arranged so as to face the surface of the grinding wheel T and measures the heat flow data radiated from the surface of the grinding wheel T, is described as an example. In this example, the heat flow sensor may measure a magnitude of the heat flux and a direction of the heat flow. The heat flow data is a value corresponding to the magnitude of the heat flux. Then, when the surface of the grinding wheel T is at a high temperature, since heat is radiated from the surface of the grinding wheel T, the detector 213d serving as the heat flow sensor may measure the magnitude of heat flux (heat flow data) radiated from the grinding wheel T. Note that the direction of the heat flow here is only the direction from the surface of the grinding wheel T toward the detector 213d.

The detector 213e is a vibration sensor that measures, as the machining state data, the vibration data generated on a support shaft (support device) that supports the grinding wheel T. The detector 213f is a vibration sensor that measures, as the machining state data, the vibration data generated on the spindles (supporting devices) of the spindle stocks 242 and 243 that support the workpiece W. For the vibration sensor serving as the detectors 213e and 213f, an acceleration sensor, an acoustic emission (AE) sensor, or the like may be used. The detector 213g is a machining sound sensor that measures sound data generated by grinding as the machining state data. The machining sound sensor serving as the detector 213g may be arranged at any position in the machining area.

(4-3. Position of Heat Flow Sensor 213d)

Any of the first to third examples may be applied to the position of the heat flow sensor 213d. In particular, in this example, the heat flow sensor 213d is arranged so as to face the surface of the grinding wheel T, and measures the heat flow data radiated from the surface of the grinding wheel T.

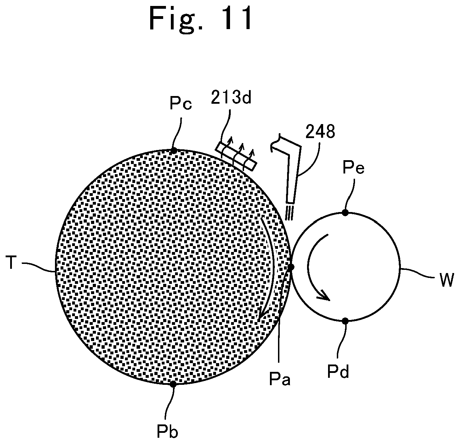

In Fig. 11, the case in which the grinding wheel T is rotated clockwise and the workpiece W is rotated counterclockwise is described as an example. A grinding point Pa is configured, at which the side surface of the grinding wheel T and the side surface of the workpiece W contact each other. In the grinding wheel T, Pa is a grinding point, Pb is a lower end, and Pc is an upper end. That is, in this example, the rotational direction of the grinding wheel T is a direction in which the grinding point Pa (lateral position on the workpiece W side), the lower end Pb, the upper end Pc, and the grinding point Pa, which are predetermined positions on the outer peripheral surface of the grinding wheel T, are moved in this order. In addition, in the workpiece W, Pa is the grinding point, Pd is the lower end, and Pe is the upper end. That is, in this example, the rotational direction of the workpiece W is a direction in which the grinding point Pa (lateral position on the grinding wheel T side), the lower end Pd, the upper end Pe, and the grinding point pa, which are predetermined positions on the outer peripheral surface of the workpiece W, are moved in this order.

The coolant nozzle 248 supplies coolant to the grinding point Pa of the workpiece W formed by the grinding wheel T. In particular, as shown in Fig. 11, while the coolant nozzle 248 supplies the coolant from the position above the grinding point Pa toward the grinding point Pa, the workpiece W is ground by the grinding wheel T.

The heat flow sensor 213d is arranged so as to face the position different from the grinding point Pa on the outer peripheral surface of the grinding wheel T. Specifically, the heat flow sensor 213d is arranged so as to face a position above the grinding point Pa on the outer peripheral surface of the grinding wheel T. Accordingly, the position of the grinding wheel T facing the heat flow sensor 213d is a position where the coolant is unlikely to be directly applied. As a result, the heat flow sensor 213d is able to measure the heat flow data of heat radiated from the surface of the grinding wheel T because the influence of the coolant is small.

Further, by being arranged as described above, the heat flow sensor 213d is located at a position rotated from the grinding point Pa by 180° or more and less than 360° in the rotational direction of the grinding wheel T. Accordingly, after the coolant is applied to the vicinity of the grinding point Pa of the grinding wheel T, the coolant is dispersed from the surface of the grinding wheel T by the centrifugal force caused by the rotation of the grinding wheel T. Accordingly, the amount of coolant adhering onto the surface of the grinding wheel T facing the heat flow sensor 213d is small. As a result, the heat flow sensor 213d is less influenced by the coolant and is thus able to measure the heat flow data of heat radiated from the surface of the grinding wheel T with higher accuracy.

In particular, the heat flow sensor 213d is arranged so as to face a position between the grinding point Pa on the outer peripheral surface of the grinding wheel T and the upper end Pc of the grinding wheel T. When the grinding wheel T is rotated in the rotational direction described above, the heat flow sensor 213d may be arranged at that position such that the coolant is more effectively dispersed by the centrifugal force caused by the rotation of the grinding wheel T. Accordingly, the heat flow sensor 213d is further less influenced by the coolant and may measure the heat flow data radiated from the surface of the grinding wheel T with higher accuracy.

In the above description, the heat flow sensor 213d is arranged at a position facing the surface of the grinding wheel T. In addition to this, the heat flow sensor 213d may be arranged at a position facing the surface of the workpiece W to measure the heat flow data radiated from the surface of the workpiece W. However, when the outer diameter of the workpiece W is small, since there is a possibility that the coolant adheres to the entire circumference of the surface of the workpiece W, the heat flow data radiated from the workpiece W may not be measured with high accuracy. Meanwhile, since the grinding wheel T generally has a large diameter, when the outer diameter of the workpiece W is small, the heat flow sensor 213d may be arranged at a position facing the surface of the grinding wheel T as described above.

When the heat flow sensor 213d is arranged at the position facing the surface of the workpiece W, it may be arranged substantially at the same position as the position for the grinding wheel T described above. The heat flow sensor 213d is preferably arranged so as to face a position above the grinding point Pa on the outer peripheral surface of the workpiece W. In particular, the heat flow sensor 213d may be arranged so as to face the position between the grinding point Pa on the outer peripheral surface of the workpiece W and the upper end Pe of the workpiece W.

(4-4. Configuration of Function Blocks of Grinding System 200)

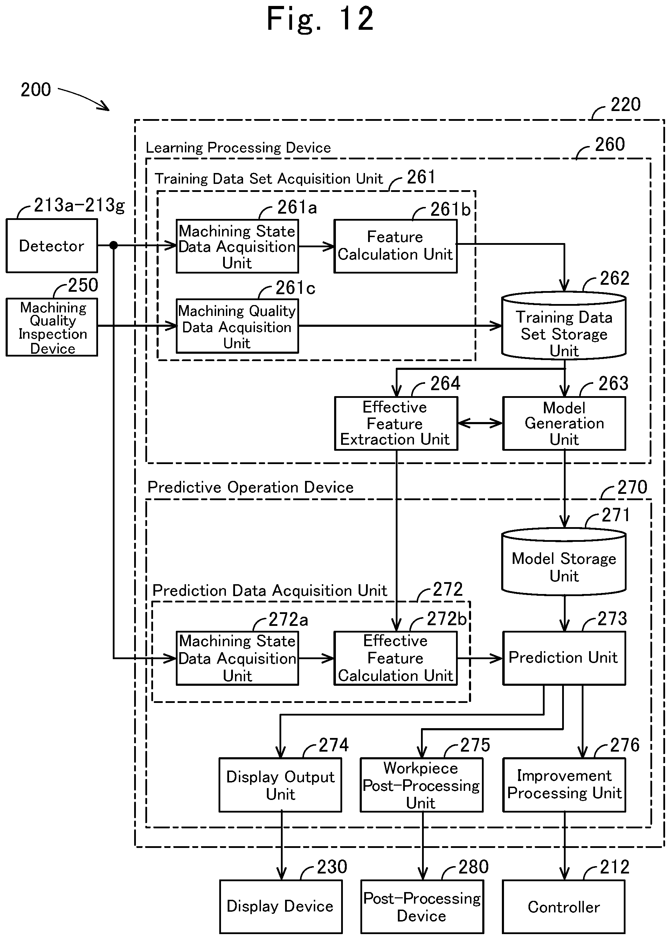

The configuration of the function blocks of the grinding system 200 will be described with reference to Fig. 12. The grinding system 200 includes a plurality of detectors 213a to 213g, an operation device 220, and a display device 230. As described above, the detectors 213a to 213g measure observable machining state data in the grinder main body 211 during grinding of the workpiece W.

Further, the case in which the grinding system 200 further includes a machining quality inspection device 250 will be described. The machining quality inspection device 250 is a device for inspecting a desired machining quality, and may be a device separate from the grinder 210 or may be a built-in device of the grinder 210.

The operation device 220 includes a learning processing device 260 and a predictive operation device 270. The learning processing device 260 performs a processing of generating a learned model by performing machine learning. That is, the learning processing device 260 serves as a learning phase in machine learning. The predictive operation device 270 performs an operation processing to predict the machining quality by using the learned model. That is, the predictive operation device 270 serves as an inference phase in machine learning. Note that the learning processing device 260 and the predictive operation device 270 may be independent devices or may be configured as one device.

The learning processing device 260 generates a learned model for predicting the machining quality of the workpiece W based on the machining state data measured by the detectors 213a to 213g and the machining quality obtained by the machining quality inspection device 250. The learning processing device 260 includes a training data set acquisition unit 261, a training data set storage unit 262, a model generation unit 263, and an effective feature extraction unit 264.

The training data set acquisition unit 261 acquires a training data set for performing machine learning. Here, the training data set acquisition unit 261 includes a machining state data acquisition unit 261a, a feature calculation unit 261b, and a machining quality data acquisition unit 261c. The machining state data acquisition unit 261a acquires the machining state data measured by each of the detectors 213a to 213g during grinding of the workpiece W.

The feature calculation unit 261b calculates a plurality of features for the machining state data acquired by the machining state data acquisition unit 261a. In this example, for the feature, various statistics in the machining state data are used. For example, the feature is a maximum value, a minimum value, an average value, variance, standard deviation, skewness, kurtosis, median value, and the like in the machining state data. Further, the feature may include statistics for data obtained by differentiating the machining state data, statistics for data obtained by performing frequency analysis on the machining state data, and the like. The feature calculation unit 261b may calculate all of the features described above or may calculate a part of the features.

For example, for the types of features, when eight types of statistics are applied to three types which are, original data, differential data, and frequency analysis data, there are 24 types of features. Then, when the 24 types of features are calculated for each of the seven types of detectors 213a to 213g, there are a total of 168 types of features.

The machining quality data acquisition unit 261c acquires the machining quality data acquired by the machining quality inspection device 250, in association with the target workpiece W. The machining quality data includes at least data representing a grinding burn state occurring on the workpiece W, and includes at least one of chattering state data occurring on the workpiece W, roundness data, and surface roughness data.

That is, the training data set acquisition unit 261 acquires the training data set including the explanatory variables and the target variable, in which the explanatory variables are the plurality of features for each of the plurality of machining state data and the target variable are the machining quality data. The training data set storage unit 262 stores the training data set acquired by the training data set acquisition unit 261.

The model generation unit 263 performs machine learning by using the training data set stored in the training data set storage unit 262. Specifically, the model generation unit 263 performs machine learning by using the plurality of features (for example, 168 types of features) for each of the plurality of machining state data as first explanatory variables and the machining quality data as the first target variable. That is, the model generation unit 263 performs machine learning by using the first explanatory variables and the first target variable as the first training data set. Then, the model generation unit 263 generates the first learned model for predicting the machining quality. In this example, the first learned models are generated by the number corresponding to the types of machining quality. Therefore, the plurality of first learned models correspond to each of the grinding burn state, the chattering state, the roundness, and the surface roughness as the machining quality.

Regression may be used as the machine learning method. For example, a decision tree, a linear regression, a ridge regression, a Lasso regression, an elastic net, a random forest, and the like are useful. In particular, by using these methods, the degree of influence on a plurality of features may be evaluated. Note that the machine learning method other than regression is also applicable.

The effective feature extraction unit 264 extracts an effective feature having a high degree of influence on the first target variable from the plurality of features by performing the machine learning described above. The effective feature is not limited to one, and a plurality of these may be extracted. It was confirmed that the heat flow data measured by the heat flow sensor 213d has a high degree of influence when the grinding burn state is used as the target variable. Therefore, when the grinding burn state is the target variable, it is preferable to use the heat flow data as the effective feature. Further, among the plurality of features relating to the heat flow data, a plurality of features having a high degree of influence may be used as the effective feature. In addition, the effective feature extraction unit 264 also extracts effective features for each of the chattering state, the roundness, and the surface roughness.

Then, after the effective feature extraction unit 264 extracts a plurality of effective features, the model generation unit 263 performs the machine learning again. Specifically, the model generation unit 263 performs machine learning by using a plurality of effective features from the plurality of features stored in the training data set storage unit 262 as second explanatory variables, and the machining quality data corresponding to the effective feature as the second target variable. That is, the model generation unit 263 performs machine learning by using the second explanatory variables and the second target variable as the second training data set. Then, the model generation unit 263 generates a second learned model for predicting the machining quality. In this example, the second learned models are generated by the number corresponding to the types of machining quality. The second learned model generated now is a different model from the first learned model generated previously.

The predictive operation device 270 predicts the machining quality of the workpiece W based on the machining state data measured during grinding. The predictive operation device 270 includes a model storage unit 271, a prediction data acquisition unit 272, a prediction unit 273, a display output unit 274, a workpiece post-processing unit 275, and an improvement processing unit 276.

The model storage unit 271 stores the plurality of second learned models generated by the model generation unit 263. The model storage unit 271 stores a plurality of second learned models corresponding to each of a plurality of machining qualities.

The prediction data acquisition unit 272 acquires prediction data during grinding. The prediction data acquisition unit 272 includes a machining state data acquisition unit 272a and an effective feature calculation unit 272b. The machining state data acquisition unit 272a acquires the machining state data measured by the plurality of detectors 213a to 213g during grinding.

An effective feature calculation unit 272b calculates one or a plurality of effective features according to the type of machining quality based on the plurality of measured machining state data. For example, when predicting the grinding burn state, the effective feature calculation unit 272b uses, as the effective feature, at least the feature relating to the heat flow data measured by the heat flow sensor 213d.

The prediction unit 273 predicts the corresponding machining quality based on the second learned model stored in the model storage unit 271 and the data acquired by the prediction data acquisition unit 272. For example, the prediction unit 273 predicts the grinding burn state based on the second learned model corresponding to the grinding burn state, and the effective feature corresponding to the grinding burn state in the effective feature calculation unit 272b of the features relating to the machining state data measured by the detectors 213a to 213g.

Here, the prediction unit 273 may predict the presence or absence of a grinding burn. In addition, the prediction unit 273 may also predict whether the degree of generation of a grinding burn is equal to or greater than a predetermined threshold. The degree of generation of the grinding burn corresponds to a degree of corresponding to the temperature of generation of the grinding burn, and is an index that corresponds to the surface hardness of the workpiece W, the burn color of the surface of the workpiece W, the depth of the grinding burn, and the like, for example. In addition, the prediction unit 273 may predict the degree of generation of a grinding burn.

The display output unit 274 outputs the predicted machining quality to the display device 230. The workpiece post-processing unit 275 causes the post-processing device 280 to perform any one of selection, disposal, and detailed inspection of the target workpiece W when the machining quality (grinding burn state or the like) predicted by the prediction unit 273 is in a predetermined state (bad state).

The improvement processing unit 276 causes the controller 212 to change the grinding machining conditions or execute truing of the grinding wheel T when the machining quality (grinding burn state or the like) predicted by the prediction unit 273 is in a predetermined state (bad state). The change of the grinding machining conditions decreases the feed rate (speed in the cutting direction) of rough grinding or increases the stock removal by finish grinding

(precise grinding, fine grinding), for example. In particular, the improvement processing unit 276 may change the grinding conditions according to the predicted depth of the grinding burn. At that time, considering the cycle time, whether to decrease the feed rate of rough grinding or to increase the stock removal by finish grinding may be determined according to the predicted depth of the grinding burn.

(4-5. Relationship Between Machining State Data Type, Prediction Target Type, and Learned Model)

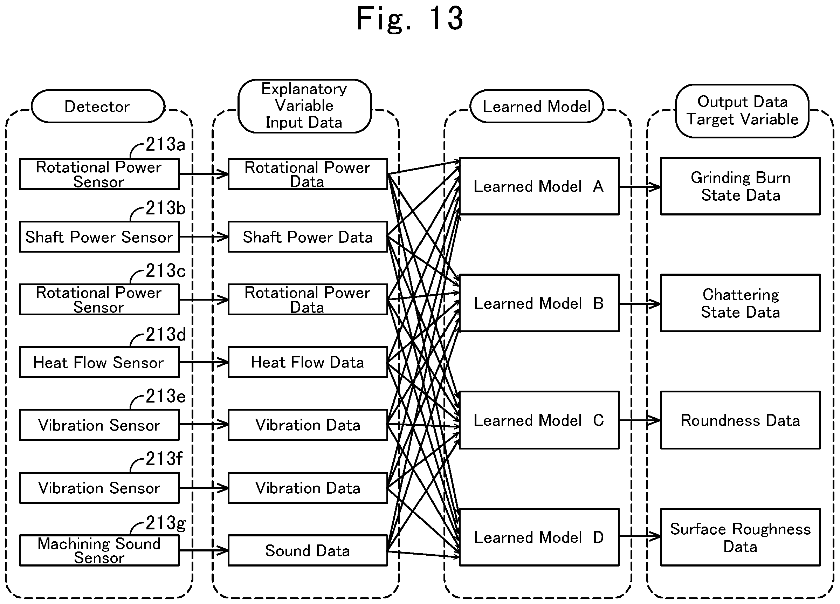

The relationship between the machining state data measured by the detectors 213a to 213g, the type of prediction target, and the learned model will be described with reference to Fig. 13. As shown in Fig. 13, the explanatory variables in machine learning (input data in the inference phase) are rotational power data, shaft power data, rotational power data, heat flow data, vibration data, vibration data, and sound data measured by the detectors 213a to 213g.

When the target variable in machine learning (output data in the inference phase) is the grinding burn state data, a learned model A is applied. When the target variable in machine learning is the chattering state data, a learned model B is applied. When the target variable in machine learning is the roundness data, a learned model C is applied. When the target variable in machine learning is the surface roughness data, a learned model D is applied.

(4-6. Degree of Influence on Grinding Burn State According to Type of Machining State Data)

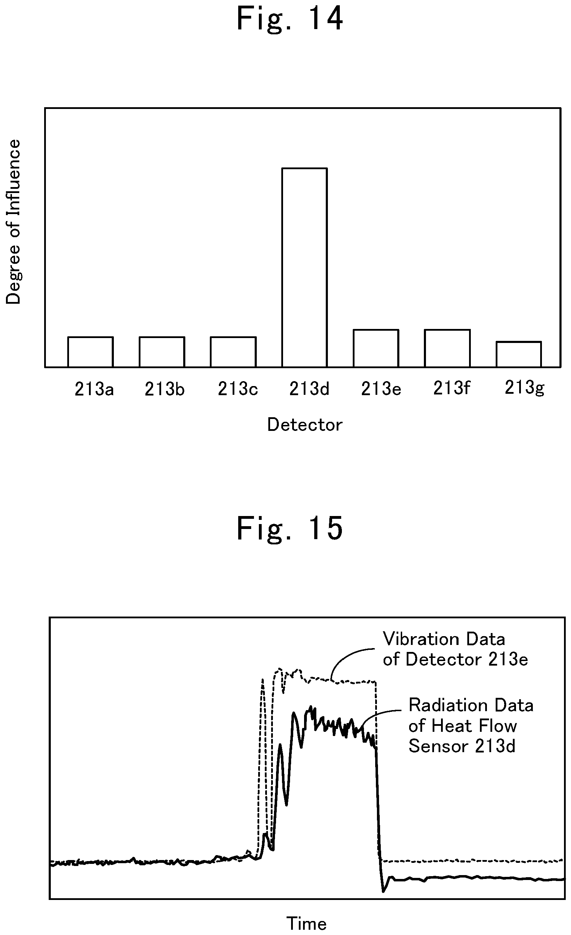

Next, the degree of influence on the grinding burn state according to the type of machining state data will be described with reference to Fig. 14. Fig. 14 shows the degree of influence of the machining state data measured by the detectors 213a to 213g on the grinding burn.

As shown in Fig. 14, it may be seen that the depth of the grinding burn has the largest degree of influence with respect to the heat flow data measured by the heat flow sensor 213d. From this, it may be said that it is effective to use the heat flow data in order to predict the grinding burn state.

(4-7. Behavior of Heat Flow Data)

Next, the behavior of heat flow data during grinding will be described with reference to Fig. 15. In Fig. 15, the vibration data generated on the support shaft supporting the grinding wheel T is also shown.

The vibration data shows a high value as soon as the grinding is started and shows a low value as soon as the grinding is completed. Further, like the vibration data, the heat flow data also shows a high value as soon as the grinding is started and shows a low value as soon as the grinding is completed. Thus, it may be seen that the heat flow data has very good followability to grinding. From this, it may be seen that the heat flow data is influenced by the heat generated by the grinding. Then, it is considered that the good followability improves the prediction accuracy of the grinding burn state.

(4-8. Effect)

The heat generated at the grinding point by grinding is transferred to the workpiece W, the grinding wheel T, the cutting chips, and the coolant. Then, the heat flow sensor 213d measures heat flow data radiated from a position different from the grinding point Pa on the surface of at least one of the grinding wheel T and the workpiece W. That is, the heat flow sensor 213d does not directly measure the temperature of the grinding point Pa. However, since the heat generated at the grinding point Pa is transferred to the workpiece W and the grinding wheel T, the heat remains on the surfaces of the workpiece W and the grinding wheel T even at positions different from the grinding point Pa. Accordingly, the heat flow sensor 213d may measure the heat flow data corresponding to the heat generated at the grinding point Pa, from the surface of at least one of the grinding wheel T and the workpiece W, even when at the position different from the grinding point Pa. As a result, by using the heat flow data measured by the heat flow sensor 213d, the grinding burn state may be predicted with high accuracy.

(5. Fifth Example)

(5-1. Configuration of Grinding System 300)

The hardware configuration of a grinding system 300 is the same as the configuration of the grinding system 200 of the fourth example shown in Fig. 9. In addition, the grinder 210 forming the grinding system 300 of this example is also the same as that of the fourth example. Further, the position of the heat flow sensor 213d is also as described in the fourth example.

(5-2. Configuration of Function Blocks of Grinding System 300)

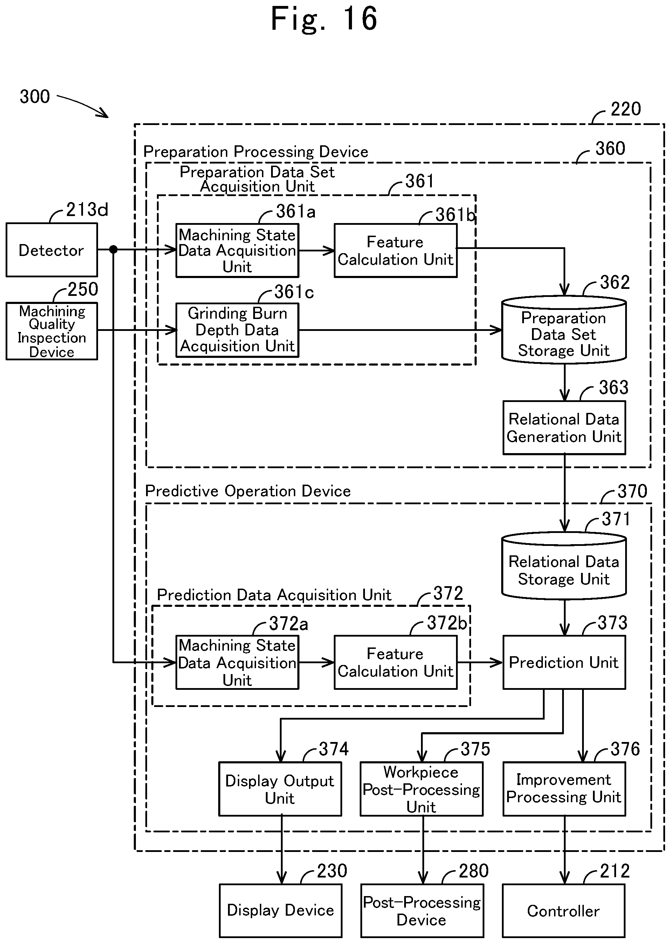

The configuration of the function blocks of the grinding system 300 will be described with reference to Figs. 16 to 17. The grinding system 300 includes a plurality of detectors 213a to 213g, an operation device 220, and a display device 230. As described above, the detector 213d is a heat flow sensor and measures heat flow data as the observable machining state data in the grinder main body 211 during grinding of the workpiece W.

Further, the case in which the grinding system 300 further includes a machining quality inspection device 250 will be described. The machining quality inspection device 250 is a device for inspecting a desired machining quality, and may be a device separate from the grinder 210 or may be a built-in device of the grinder 210. The machining quality inspection device 250 is a device that measures a grinding burn depth. For example, for the device 250, a measurement device using eddy current or the like may be applied.

The operation device 220 includes a preparation processing device 360 and a predictive operation device 370. The preparation processing device 360 performs a processing of generating relational data representing the relationship between the heat flow data and the grinding burn depth data as the machining state data. The predictive operation device 370 performs an operation processing to predict the grinding burn depth as the machining quality by using the relational data. Note that the preparation processing device 360 and the predictive operation device 370 may be independent devices or may be configured as one device.

The preparation processing device 360 generates relational data for predicting the grinding burn depth as the machining quality of the workpiece W based on, as the machining state data, the heat flow data measured by the detector 213d and, as the machining quality, the grinding burn depth data obtained by the machining quality inspection device 250. The preparation processing device 360 includes a preparation data set acquisition unit 361, a preparation data set storage unit 362, and a relational data generation unit 363.

The preparation data set acquisition unit 361 acquires a preparation data set for generating the relational data. Here, the preparation data set acquisition unit 361 includes a machining state data acquisition unit 361a, a feature calculation unit 361b, and a grinding burn depth data acquisition unit 361c. The machining state data acquisition unit 361a acquires, as the machining state data, the heat flow data measured by the heat flow sensor serving as the detector 213d during grinding of the workpiece W. Here, the behavior of the heat flow data during grinding is as shown in Fig. 15 as described above.

The feature calculation unit 361b calculates a plurality of features for the heat flow data acquired by the machining state data acquisition unit 361a. Here, the feature is an index for generating the relational data, and for example, various statistics in the heat flow data may be used. For example, the feature is selected from among a maximum value, a minimum value, an average value, variance, standard deviation, skewness, kurtosis, median value, and the like in the heat flow data. Further, the feature may be selected from among statistics for data obtained by differentiating the machining state data, statistics for data obtained by performing frequency analysis on the machining state data, and the like. The feature calculation unit 361b may calculate all of the features described above or may calculate a part of the features. In particular, in this example, for the feature, only the maximum value in the heat flow data is used. The grinding burn depth data acquisition unit 361c acquires the grinding burn depth data acquired by the machining quality inspection device 250 in association with the target workpiece W.

The preparation data set storage unit 362 stores the preparation data set acquired by the preparation data set acquisition unit 361 described above, that is, stores the feature relating to the heat flow data and the grinding burn depth data in association with the workpiece W.

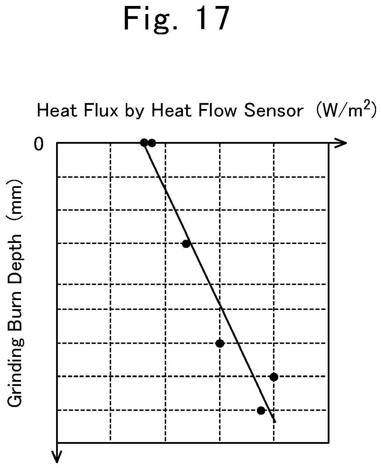

The relational data generation unit 363 uses the preparation data set stored in the preparation data set storage unit 362. The maximum value of magnitude of the heat flux (heat flow data) and the grinding burn depth have the relationship shown in Fig. 17. That is, the maximum value of magnitude of the heat flux (heat flow data) and the grinding burn depth have a linear relationship. Specifically, as the maximum value of the heat flux (heat flow data) increases, the grinding burn depth also increases.

The predictive operation device 370 predicts the grinding burn depth of the workpiece W based on the heat flow data measured during grinding. The predictive operation device 370 includes a relational data storage unit 371, a prediction data acquisition unit 372, a prediction unit 373, a display output unit 374, a workpiece post-processing unit 375, and an improvement processing unit 376.

The relational data storage unit 371 stores the relational data (shown in Fig. 17) generated by the relational data generation unit 363. The prediction data acquisition unit 372 acquires prediction data during grinding. The prediction data acquisition unit 372 includes a machining state data acquisition unit 372a and a feature calculation unit 372b. The machining state data acquisition unit 372a acquires the machining state data (heat flow data) measured by the detector 213d (heat flow sensor) during grinding.

The feature calculation unit 372b calculates the feature relating to the measured heat flow data, that is, calculates the feature used for generating the relational data. For example, the feature calculation unit 372b uses, as the feature, the maximum value of the heat flow data measured by the heat flow sensor 213d.

The prediction unit 373 predicts the grinding burn depth based on the relational data stored in the relational data storage unit 371 and the data acquired by the prediction data acquisition unit 372. That is, the prediction unit 373 calculates, in the relational data, the grinding burn depth corresponding to the heat flow data acquired by the prediction data acquisition unit 372. In this example, the prediction unit 373 calculates, in the relational data, the grinding burn depth corresponding to the maximum value of the heat flow data.

The display output unit 374 outputs the predicted grinding burn depth to the display device 230. The workpiece post-processing unit 375 causes the post-processing device 280 to perform any one of selection, disposal, and detailed inspection of the target workpiece W when the grinding burn depth predicted by the prediction unit 373 is equal to or greater than a predetermined depth.

The improvement processing unit 376 causes the controller 212 to change the grinding machining conditions or execute truing of the grinding wheel T according to the grinding burn depth predicted by the prediction unit 373. The change of the grinding machining conditions decreases the feed rate (speed in the cutting direction) of rough grinding or increases the stock removal by finish grinding (precise grinding, fine grinding), for example. In particular, the improvement processing unit 376 may change the grinding conditions according to the predicted grinding burn depth. At that time, in consideration of the cycle time, the improvement processing unit 376 may determine whether to decrease the feed rate of rough grinding or to increase the stock removal by finish grinding, according to the predicted grinding burn depth.

(5-3. Effect)

The heat generated at the grinding point by grinding is transferred to the workpiece W, the grinding wheel T, the cutting chips, and the coolant. Then, the heat flow sensor 213d measures heat flow data radiated from a position different from the grinding point Pa on the surface of at least one of the grinding wheel T and the workpiece W. That is, the heat flow sensor 213d does not directly measure the temperature of the grinding point Pa. However, since the heat generated at the grinding point Pa is transferred to the workpiece W and the grinding wheel T, the heat remains on the surfaces of the workpiece W and the grinding wheel T even at positions different from the grinding point Pa. Accordingly, the heat flow sensor 213d may measure the heat flow data corresponding to the heat generated at the grinding point Pa, from the surface of at least one of the grinding wheel T and the workpiece W, even at the position different from the grinding point Pa. Then, the heat flow data and the grinding burn depth have a predetermined relationship. Therefore, by using the heat flow data measured by the heat flow sensor 213d, the grinding burn depth may be predicted with high accuracy.

(6. Sixth Example)

In the fifth example described above, the feature calculation units 361b and 372b calculate the maximum value of the heat flow data as the feature, and the relational data generation unit 363 generates the relational data representing the relationship between the maximum value of the heat flow data and the grinding burn depth. Then, the prediction unit 373 predicts the grinding burn depth based on the relational data and the maximum value of the heat flow data.

In addition to this, the relational data may represent a relationship between a plurality of features relating to the heat flow data and the grinding burn depth. In this case, for example, the maximum value of the heat flow data, the maximum value of the first-order differentiation, and the like may be applied as the plurality of features. That is, the relational data is three-dimensional data representing the relationship among the maximum value of the heat flow data, the maximum value of the first-order differentiation of the heat flow data, and the grinding burn depth. It goes without saying that the relational data may be four-dimensional data or higher than that, representing the relationship between three or more features and the grinding burn depth.

In this case, the feature calculation units 361b and 372b calculate a plurality of features to be applied. For example, the feature calculation units 361b and 372b calculate the maximum value of the heat flow data and the maximum value of the first-order differentiation of the heat flow data. Then, the prediction unit 373 calculates the grinding burn depth corresponding to the values of the plurality of features based on the plurality of features calculated by the feature calculation unit 372b of the prediction data acquisition unit 372 and the relational data stored in the relational data storage unit 371.

Therefore, by using a plurality of features, the grinding burn depth may be calculated with high accuracy. For example, it is considered that, as the maximum value of the heat flow data increases, the grinding burn depth increases, and as the maximum value of the first-order differentiation of the heat flow data increases, the grinding burn depth increases. As described above, by using the maximum value of the heat flow data and the maximum value of the first-order differentiation of the heat flow data, the grinding burn depth may be calculated with high accuracy.

(7. Seventh Example)

In the fifth and sixth examples, the case of generating the relational data representing the relationship between the grinding burn depth and the feature relating to the heat flow data was described as an example. The relational data is not easily generated when there are a large number of features. Therefore, as a seventh example, machine learning using a large number of features is applied. In addition, configurations for performing substantially the same processing as the fifth example are denoted by the same reference numerals, and detailed description thereof is omitted.

The grinding system 400 includes a plurality of detectors 213a to 213g, an operation device 220, and a display device 230. As described above, the detectors 213a to 213g measure observable machining state data in the grinder main body 211 during grinding of the workpiece W.

The operation device 220 includes a learning processing device 460 and a predictive operation device 470. The learning processing device 460 performs a processing of generating a learned model by performing machine learning. That is, the learning processing device 460 serves as a learning phase in machine learning. The predictive operation device 470 performs an operation processing to predict the grinding burn depth as the machining quality by using the learned model. That is, the predictive operation device 470 serves as an inference phase in machine learning. Note that the learning processing device 460 and the predictive operation device 470 may be independent devices or may be configured as one device.

The learning processing device 460 generates a learned model for predicting the grinding burn depth as the machining quality of the workpiece W, based on the machining state data measured by the detectors 213a to 213g and, as the machining quality, the grinding burn depth data obtained by the machining quality inspection device 250. The learning processing device 460 includes a training data set acquisition unit 461, a training data set storage unit 462, and a model generation unit 463.

The training data set acquisition unit 461 acquires a training data set for performing machine learning. Here, the training data set acquisition unit 461 includes a machining state data acquisition unit 461a, a feature calculation unit 461b, and the grinding burn depth data acquisition unit 361c. The machining state data acquisition unit 461a acquires the machining state data measured by each of the detectors 213a to 213g during grinding of the workpiece W. That is, the machining state data acquisition unit 461a acquires data measured by the other detectors 213a to 213c and 213e to 213g in addition to the heat flow data measured by the heat flow sensor 213d.

The feature calculation unit 461b calculates a plurality of features for the machining state data acquired by the machining state data acquisition unit 461a. In this example, for the feature, various statistics in the machining state data are used. For example, the feature is a maximum value, a minimum value, an average value, variance, standard deviation, skewness, kurtosis, median value, and the like in the machining state data. Further, the feature may include statistics for data obtained by differentiating the machining state data, statistics for data obtained by performing frequency analysis on the machining state data, and the like. The feature calculation unit 461b may calculate all of the features described above or may calculate a part of the features.

For example, for the types of features, when eight types of statistics are applied to three types which are, original data, differential data, and frequency analysis data, there are 24 types of features. Then, when the 24 types of features are calculated for each of the seven types of detectors 213a to 213g, there are a total of 168 types of features.

That is, the training data set acquisition unit 461 acquires the training data set including the explanatory variables and the target variable, in which the explanatory variables are the plurality of features for each of the plurality of machining state data and the target variables are the machining quality data. The training data set storage unit 462 stores the training data set acquired by the training data set acquisition unit 461.

The model generation unit 463 performs machine learning by using the training data set stored in the training data set storage unit 462. Specifically, the model generation unit 463 performs machine learning by using the plurality of features (for example, 168 types of features) for each of the plurality of machining state data as the explanatory variables, and the grinding burn depth data as the target variable. That is, the model generation unit 463 performs machine learning by using the explanatory variables and the target variable as the training data set. Then, the model generation unit 463 generates a learned model for predicting the grinding burn depth.

Regression may be used as the machine learning method. For example, a decision tree, a linear regression, a ridge regression, a Lasso regression, an elastic net, a random forest, and the like are useful. In particular, using these methods, the degree of influence on a plurality of features may be evaluated. Note that the machine learning method other than regression is also applicable.

The predictive operation device 470 predicts the machining quality of the workpiece W based on the machining state data measured during grinding. The predictive operation device 470 includes a model storage unit 471, a prediction data acquisition unit 472, a prediction unit 473, a display output unit 374, a workpiece post-processing unit 375, and an improvement processing unit 376.

The model storage unit 471 stores the learned model generated by the model generation unit 463. The prediction data acquisition unit 472 acquires prediction data during grinding. The prediction data acquisition unit 472 includes a machining state data acquisition unit 472a and a feature calculation unit 472b. The machining state data acquisition unit 472a acquires the machining state data measured by the plurality of detectors 213a to 213g during grinding. The feature calculation unit 472b calculates a feature relating to the plurality of measured machining state data. The feature calculation unit 472b performs the same processing as the feature calculation unit 461b in the learning processing device 460. The prediction unit 473 predicts the grinding burn depth based on the learned model stored in the model storage unit 471 and the data acquired by the prediction data acquisition unit 472. The grinding burn depth predicted by the prediction unit 473 is used for processing by the display output unit 374, the workpiece post-processing unit 375, and the improvement processing unit 376.

To provide a grinding system capable of improving the accuracy of determining a grinding burn of a workpiece, the grinding system (100) includes a grinding wheel (2) that grinds a workpiece (80), an electric motor (3) for a grinding wheel, which rotationally drives the grinding wheel (2), a Z-axis motor (41) and an X-axis motor (51), which generate a moving force for relatively moving the workpiece (80) and the grinding wheel (2), a controller 6 that controls the electric motor (3) for the grinding wheel, the Z-axis motor (41), and the X-axis motor (51), and an operation unit (61) that determines the occurrence of a grinding burn on the workpiece (80) based on a measurement value of the heat flow sensor (7) that measures the heat flow radiated from a surface of at least one of the grinding wheel (2) and the workpiece (80) as the heat is generated at a grinding point (P) where the grinding wheel (2) comes into contact with the workpiece (80).

Reference Signs List

100: grinding system
1: bed, 2: grinding wheel, 3: electric motor for grinding wheel, 6: controller, 7, 7A, 7B: heat flow sensor, 7a: measurement surface, 7b: back surface, 61: operation unit, 70, 70A, 70B: metal plate, 80: workpiece, 81: coolant nozzle

200: grinding system
210: grinder, 211: grinder main body, 212: controller, 213a-213g: detector, 213d: heat flow sensor (detector), 220: operation device, 230: display device, 248: coolant nozzle, 250: machining quality inspection device, 260: learning processing device, 261: training data set acquisition unit, 261a: machining state data acquisition unit, 261b: feature calculation unit, 261c: machining quality data acquisition unit, 262: training data set storage unit, 263: model generation unit, 264: effective feature extraction unit, 270: predictive operation device, 271: model storage unit, 272: prediction data acquisition unit, 272a: machining state data acquisition unit, 272b: effective feature calculation unit, 273: prediction unit, 274: display output unit, 275: workpiece post-processing unit, 276: improvement processing unit, T: grinding wheel, W: workpiece

300: grinding system
360: preparation processing device, 361: preparation data set acquisition unit, 361a: machining state data acquisition unit, 361b: feature calculation unit, 361c: data acquisition unit, 362: preparation data set storage unit, 363: relational data generation unit, 370: predictive operation device, 371: relational data storage unit, 372: prediction data acquisition unit, 372a: machining state data acquisition unit, 372b: feature calculation unit, 373: prediction unit, 374: display output unit, 375: workpiece post-processing unit, 376: improvement processing unit

400: grinding system
460: learning processing device, 461: training data set acquisition unit, 461a: machining state data acquisition unit, 461b: feature calculation unit, 462: training data set storage unit, 463: model generation unit, 470: predictive operation device, 471: model storage unit, 472: prediction data acquisition unit, 472a: machining state data acquisition unit, 472b: feature calculation unit, 473: prediction unit

**Claims**

1. A grinding system (100, 200, 300, 400), comprising:

a grinding wheel (2, T) that grinds a workpiece (80, W);

a drive mechanism (3) that rotationally drives the grinding wheel (2, T);

a moving mechanism (41,51) that relatively moves the workpiece (80, W) and the grinding wheel (2, T);

a controller (6,212) that controls the drive mechanism (3) and the moving mechanism (41,51); **characterized by**

an operation unit (61,220) that determines the occurrence of a grinding burn on the workpiece (80,W) based on a measurement value of a heat flow sensor (7,7A,7B,213d) that measures a heat flow radiated from a surface of at least one of the grinding wheel (2,T) and the workpiece(80,W) as the heat is generated at a grinding point (P,Pa) where the grinding wheel (2,T) comes into contact with the workpiece (80,W).

2. The grinding system according to claim 1, wherein the controller (6,212) changes grinding conditions when it is determined that the grinding burn occurs.

3. The grinding system according to claim 1 or 2, wherein the heat flow sensor (7,213d) is provided at a position facing an outer peripheral surface of the grinding wheel (2, T) .

4. The grinding system according to claim 1 or 2, wherein the heat flow sensor (7A) is provided at a position facing an outer peripheral surface (80a) of the workpiece (80, W).

5. The grinding system according to claim 1 or 2, wherein the heat flow sensor (7B) is provided at a position facing an end face (21) in a rotation axis direction of the grinding wheel (T).

6. The grinding system according to claim 1, comprising:

a grinder main body (211) configured to include the grinding wheel (T), the drive mechanism (3), and the moving mechanism (41,51), and grinding the workpiece (W) by the grinding wheel (T); and

a detector(213) that measures observable machining state data in the grinder main body (211) during grinding of the workpiece (W),

wherein the operation unit (220) includes a prediction unit (273,373,473) that predicts a grinding burn state by using the machining state data measured by the detector (213), and

the detector (213) includes the heat flow sensor(213d) that measures, as the machining state data, heat flow data radiated from a position different from the grinding point (Pa) on a surface of at least one of the grinding wheel (T) and the workpiece (W).

7. The grinding system according to claim 6, further comprising:

a learning processing device (260,460) that generates a learned model by performing machine learning by using a training data set including an explanatory variable and a target variable, wherein the explanatory variable is the machining state data measured by the detector (213a-213g), and the target variable is data representing the grinding burn state generated on the workpiece (W); and

a model storage unit (271,471) that stores the learned model generated by the learning processing device (260,460),

wherein the prediction unit (273,473) predicts the grinding burn state by using the learned model and the machining state data.

8. The grinding system according to claim 6 or 7, wherein the prediction unit (273,473) predicts presence or absence of the grinding burn as the grinding burn state.

9. The grinding system according to any one of claims 6 to 8, wherein the prediction unit (273,473) predicts, as the grinding burn state, whether a degree of generation of the grinding burn is equal to or more than a predetermined threshold value.

10. The grinding system according to any one of claims 6 to 9, wherein the prediction unit (273,473) predicts a depth of the grinding burn as the grinding burn state.

11. The grinding system according to any one of claims 6 to 10, wherein the heat flow sensor (213d) is arranged so as to face a position different from the grinding point (Pa) on an outer peripheral surface of at least one of the grinding wheel (T) and the workpiece (W).

12. The grinding system according to claim 11, wherein the grinder main body (211) performs the grinding while supplying a coolant from a position above the grinding point (Pa) toward the grinding point (Pa), and

the heat flow sensor (213d) is arranged so as to face a position above the grinding point (Pa) on the outer peripheral surface of at least one of the grinding wheel (T) and the workpiece (W).

13. The grinding system according to claim 12, wherein a rotational direction of the grinding wheel (T) is a direction in which a predetermined position on a surface of the grinding wheel (T) is moved in the order of a side of the grinding wheel (T) which is the grinding point (Pa), a lower end (Pb), an upper end (Pc), and the grinding point (Pa), and

the heat flow sensor (213d) is arranged so as to face a position above the grinding point (Pa) on the outer peripheral surface of the grinding wheel (T).

14. The grinding system according to claim 13, wherein the heat flow sensor (213d) is arranged so as to face a position between the grinding point (Pa) and the upper end (Tc) of the grinding wheel (T) on the outer peripheral surface of the grinding wheel (T).

15. The grinding system according to claim 12, wherein a rotational direction of the workpiece (W) is a direction in which a predetermined position on a surface of the workpiece (W) is moved in the order of a side of the workpiece (W) which is the grinding point (Pa), a lower end (Pd), an upper end (Pe), and the grinding point (Pa), and

the heat flow sensor (213d) is arranged so as to face a position above the grinding point (Pa) on the outer peripheral surface of the workpiece (W).

16. The grinding system according to claim 7, wherein the learning processing device (260,460):

performs machine learning by using a first training data set including a first explanatory variable and a first target variable, and extracts an effective feature having a high degree of influence on the first target variable from a plurality of features, the plurality of features relating to the machining state data are used as the first explanatory variable, and data representing the grinding burn state is used as the first target variable; and

generates the learned model by performing machine learning by using a second training data set including a second explanatory variable and a second target variable, the extracted effective feature is the second explanatory variable, and data representing the grinding burn state is the second target variable, and

the prediction unit (273,473) predicts the grinding burn state by using the learned model and the effective feature relating to the machining state data.

17. The grinding system according to claim 6, further comprising a relational data storage unit (371) that stores relational data between the heat flow data and the depth of the grinding burn, wherein

the prediction unit (373) predicts the depth of the grinding burn by calculating, in the relational data, the depth of the grinding burn corresponding to the heat flow data.

18. The grinding system according to claim 17, wherein the relational data storage unit (371) stores relational data between a plurality of features relating to the heat flow data and the depth of the grinding burn, and the prediction unit (373) predicts the depth of the grinding burn by calculating, in the relational data, the depth of the grinding burn corresponding to a plurality of features relating to the heat flow data.

19. The grinding system according to any one of claims 6 to 16, wherein the detector (213) includes at least one of:

a rotational power sensor (213a,213c) that measures, as the machining state data, rotational power data of at least one of the grinding wheel (T) and the workpiece (W);

a shaft power sensor (213b) that measures, as the machining state data, shaft power data for axially moving the grinding wheel and the workpiece in the cutting direction;

a machining sound sensor (213g) that measures sound data generated by the grinding machining as the machining state data; and

a vibration sensor (213e,213f) that measures, as the machining state data, vibration data generated in a supporting part supporting at least one of the grinding wheel (T) and the workpiece (W).

20. The grinding system according to any one of claims 6 to 19, further comprising a workpiece post-processing unit (275,375) that performs any one of selection, disposal, and detailed inspection of the workpiece (W) according to the grinding burn state predicted by the prediction unit (273,373,473).

21. The grinding system according to any one of claims 6 to 20, comprising an improvement processing unit (276,376) that changes grinding machining conditions or performs truing of the grinding wheel (T) according to the grinding burn state predicted by the prediction unit (273,373,473).

22. The grinding system according to claim 7, wherein the learning processing device (260,460) generates the learned model with, in addition to the grinding burn state, at least one of chattering state data generated on the workpiece (W), roundness data and surface roughness data as the target variable, and the prediction unit (273,473) predicts the grinding burn state by using the learned model and the machining state data, and also predicts at least one of chattering state, roundness, and surface roughness generated in the workpiece (W).

**Patentansprüche**

1. Schleifsystem (100, 200, 300, 400), umfassend:

   eine Schleifscheibe (2, T), die ein Werkstück (80, W) schleift;
   einen Antriebsmechanismus (3), der die Schleifscheibe (2, T) rotierend antreibt;
   einen Bewegungsmechanismus (41, 51), der das Werkstück (80, W) und die Schleifscheibe (2, T) relativ bewegt;
   eine Steuereinrichtung (6, 212), die den Antriebsmechanismus (3) und den Bewegungsmechanismus (41, 51) steuert;
   **gekennzeichnet durch**
   eine Betriebseinheit (61, 220), die das Auftreten eines Schleifbrandes an dem Werkstück (80, W) basierend auf einem Messwert eines Wärmeflusssensors (7, 7A, 7B, 213d) bestimmt, der einen Wärmefluss misst, der von einer Fläche der Schleifscheibe (2, T) und/oder des Werkstücks (80, W) abgestrahlt wird, während die Wärme an einem Schleifpunkt (P, Pa) erzeugt wird, wo die Schleifscheibe (2, T) in Kontakt mit dem Werkstück (80, W) kommt.

2. Schleifsystem nach Anspruch 1, wobei die Steuereinrichtung (6, 212) die Schleifbedingungen ändert, wenn festgestellt wird, dass der Schleifbrand auftritt.

3. Schleifsystem nach Anspruch 1 oder 2, wobei der Wärmeflusssensor (7, 213d) an einer Position vorgesehen ist, die einer äußeren Umfangsfläche der Schleifscheibe (2, T) gegenüberliegt.

4. Schleifsystem nach Anspruch 1 oder 2, wobei der Wärmeflusssensor (7A) an einer Position vorgesehen ist, die einer äußeren Umfangsfläche (80a) des Werkstücks (80, W) gegenüberliegt.

5. Schleifsystem nach Anspruch 1 oder 2, wobei der Wärmeflusssensor (7B) an einer Position vorgesehen ist, die einer Endfläche (21) in Richtung der Drehachse der Schleifscheibe (T) gegenüberliegt.

6. Schleifsystem nach Anspruch 1, umfassend:

   einen Schleifhauptkörper (211), der so gestaltet ist, dass er die Schleifscheibe (T), den Antriebsmechanismus (3) und den Bewegungsmechanismus (41, 51) beinhaltet und das Werkstück (W) mittels der Schleifscheibe (T) schleift; und
   einen Detektor (213), der beobachtbare Bearbeitungszustandsdaten in dem Schleifhauptkörper (211) während des Schleifens des Werkstücks (W) misst,
   wobei die Betriebseinheit (220) eine Prognoseeinheit (273, 373, 473) beinhaltet, die einen Schleifbrandzustand unter Verwendung der mittels des Detektors (213) gemessenen Bearbeitungszustandsdaten vorhersagt, und
   der Detektor (213) den Wärmeflusssensor (213d) beinhaltet, der Wärmeflussdaten, die von einer von dem Schleifpunkt (Pa) unterschiedlichen Position auf einer Fläche der Schleifscheibe (T) und/oder des Werkstücks (W) abgestrahlt werden, als die Bearbeitungszustandsdaten misst.

7. Schleifsystem nach Anspruch 6, ferner umfassend:

   eine Lernverarbeitungsvorrichtung (260, 460), die ein gelerntes Modell erzeugt, mittels Durchführen von Maschinenlernen unter Verwendung eines Trainingsdatensatzes, der eine explanative Variable und eine Zielvariable beinhaltet, wobei die explanative Variable die mittels des Detektors (213a-213g) gemessenen Bearbeitungszustandsdaten sind und die Zielvariable Daten sind, die dem an dem Werkstück (W) erzeugten Schleifbrandzustand entsprechen; und
   eine Modellspeichereinheit (271, 471), die das gelernte Modell speichert, das mittels der Lernverarbeitungsvorrichtung (260, 460) erzeugt wird,
   wobei die Prognoseeinheit (273, 473) den Schleifbrandzustand unter Verwendung des gelernten Modells und der Bearbeitungszustandsdaten vorhersagt.

8. Schleifsystem nach Anspruch 6 oder 7, wobei die Prognoseeinheit (273, 473) das Vorhandensein oder Nichtvorhandensein des Schleifbrandes als Schleifbrandzustand vorhersagt.

9. Schleifsystem nach einem der Ansprüche 6 bis 8, wobei die Prognoseeinheit (273, 473) als den Schleifbrandzustand vorhersagt, ob ein Ausmaß an Erzeugung des Schleifbrandes gleich oder größer als ein vorgegebener Schwellenwert ist.

10. Schleifsystem nach einem der Ansprüche 6 bis 9, wobei die Prognoseeinheit (273, 473) eine Tiefe des Schleifbrandes als den Schleifbrandzustand vorhersagt.

11. Schleifsystem nach einem der Ansprüche 6 bis 10, wobei der Wärmeflusssensor (213d) so angeordnet ist, dass er einer anderen Position als dem Schleifpunkt (Pa) an einer äußeren Umfangsfläche der Schleifscheibe (T) und/oder des Werkstücks (W) gegenüberliegt.

12. Schleifsystem nach Anspruch 11, wobei der Schleifhauptkörper (211) das Schleifen durchführt, während er ein Kühlmittel von einer Position oberhalb des Schleifpunktes (Pa) zu dem Schleifpunkt (Pa) zuführt, und
der Wärmeflusssensor (213d) so angeordnet ist, dass er einer Position oberhalb des Schleifpunkts (Pa) an der äußeren Umfangsfläche der Schleifscheiben (T) und/oder des Werkstücks (W) gegenüberliegt.

13. Schleifsystem nach Anspruch 12, wobei

eine Drehrichtung der Schleifscheibe (T) eine Richtung ist, in der eine vorbestimmte Position an einer Fläche der Schleifscheibe (T) in der Reihenfolge von einer Seite der Schleifscheibe (T), die der Schleifpunkt (Pa) ist, zu einem unteren Ende (Pb), zu einem oberen Ende (Pc) und zu dem Schleifpunkt (Pa) bewegt wird, und
der Wärmeflusssensor (213d) so angeordnet ist, dass er einer Position oberhalb des Schleifpunktes (Pa) an der äußeren Umfangsfläche der Schleifscheibe (T) zugewandt ist.

14. Schleifsystem nach Anspruch 13, wobei der Wärmeflusssensor (213d) so angeordnet ist, dass er einer Position zwischen dem Schleifpunkt (Pa) und dem oberen Ende (Tc) der Schleifscheibe (T) an der äußeren Umfangsfläche der Schleifscheibe (T) gegenüberliegt.

15. Schleifsystem nach Anspruch 12, wobei

eine Drehrichtung des Werkstücks (W) eine Richtung ist, in der eine vorgegebene Position an einer Fläche des Werkstücks (W) in der Reihenfolge von einer Seite des Werkstücks (W), die der Schleifpunkt (Pa) ist, zu einem unteren Ende (Pd), zu einem oberen Ende (Pe) und zu dem Schleifpunkt (Pa) bewegt wird, und
der Wärmeflusssensor (213d) so angeordnet ist, dass er einer Position oberhalb des Schleifpunkts (Pa) an der äußeren Umfangsfläche des Werkstücks (W) gegenüberliegt.

16. Schleifsystem nach Anspruch 7, wobei die Lernverarbeitungsvorrichtung (260, 460):

Maschinenlernen unter Verwendung eines ersten Trainingsdatensatzes durchführt, der eine erste explanative Variable und eine erste Zielvariable beinhaltet, und ein wirksames Merkmal, das einen hohen Grad an Einfluss auf die erste Zielvariable hat, aus einer Mehrzahl an Merkmalen extrahiert, wobei die Mehrzahl an Merkmalen, die sich auf die Bearbeitungszustandsdaten beziehen, als die erste explanative Variable verwendet werden, und Daten, die dem Schleifbrandzustand entspricht, als die erste Zielvariable verwendet werden; und

das gelernte Modell mittels Ausführen von Maschinenlernen unter Verwendung eines zweiten Trainingsdatensatzes erzeugt, der eine zweite explanative Variable und eine zweite Zielvariable beinhaltet, wobei das extrahierte wirksame Merkmal die zweite explanative Variable ist und Daten, die dem Schleifbrandzustand entsprechen, die zweite Zielvariable sind, und
die Prognoseeinheit (273, 473) den Schleifbrandzustand mittels Verwendung des gelernten Modells und des wirksamen Merkmals in Bezug auf die Bearbeitungszustandsdaten vorhersagt.

17. Schleifsystem nach Anspruch 6, ferner mit einer Bezugsdatenspeichereinheit (371), die Bezugsdaten zwischen den Wärmeflussdaten und der Tiefe des Schleifbrandes speichert, wobei
die Prognoseeinheit (373) die Tiefe des Schleifbrandes vorhersagt, mittels Berechnen der Tiefe des Schleifbrandes in den Bezugsdaten entsprechend den Wärmeflussdaten.

18. Schleifsystem nach Anspruch 17, wobei die Bezugsdatenspeichereinheit (371) Bezugsdaten zwischen einer Mehrzahl an Merkmalen speichert, die sich auf die Wärmeflussdaten und die Tiefe des Schleifbrandes beziehen, und
die Prognoseeinheit (373) die Tiefe des Schleifbrandes vorhersagt, mittels Berechnen der Tiefe des Schleifbrandes in den Bezugsdaten entsprechend einer Mehrzahl an Merkmalen, die sich auf die Wärmeflussdaten beziehen.

19. Schleifsystem nach einem der Ansprüche 6 bis 16, wobei der Detektor (213) mindestens eines der folgenden Merkmale umfasst:

einen Rotationsleistungssensor (213a, 213c), der Rotationsleistungsdaten der Schleifscheibe (T) und/oder des Werkstücks (W) als die Bearbeitungszustandsdaten misst;
einen Wellenleistungssensor (213b), der als die Bearbeitungszustandsdaten Wellenleistungsdaten für die axiale Bewegung der Schleifscheibe und des Werkstücks in der Schneidrichtung misst;
einen Bearbeitungsgeräuschsensor (213g), der durch die Schleifbearbeitung erzeugte Geräuschdaten als die Bearbeitungszustandsdaten misst; und
einen Schwingungssensor (213e, 213f), der als die Bearbeitungszustandsdaten Schwingungsdaten misst, die in einem Stützteil erzeugt werden, das die Schleifscheibe (T) und/oder das Werkstück (W) stützt.

20. Schleifsystem nach einem der Ansprüche 6 bis 19, ferner mit einer Werkstücknachbearbeitungseinheit (275, 375), die eine Entsorgung und/oder eine detaillierte Prüfung des Werkstücks (W) entsprechend dem von der Prognoseeinheit (273, 373, 473) vorhergesagten Schleifbrandzustand durchführt.

21. Schleifsystem nach einem der Ansprüche 6 bis 20, mit einer Verbesserungsverarbeitungseinheit (276, 376), die entsprechend dem von der Prognoseeinheit (273, 373, 473) vorhergesagten Schleifbrandzustand die Schleifbearbeitungsbedingungen ändert oder ein Richten der Schleifscheibe (T) durchführt.

22. Schleifsystem nach Anspruch 7, wobei die Lernverarbeitungsvorrichtung (260, 460) das gelernte Modell zusätzlich zu dem Schleifbrandzustand mit der am Werkstück (W) erzeugten Flatterzustandsdaten, Rundheitsdaten und/oder Oberflächenrauhigkeitsdaten als Zielvariable erzeugt, und
die Prognoseeinheit (273, 473) den Schleifbrandzustand unter Verwendung des gelernten Modells und der Bearbeitungszustandsdaten vorhersagt und auch mindestens eines von Flatterzustand, Rundheit und Oberflächenrauhigkeit, die in dem Werkstück (W) erzeugt werden, vorhersagt.

**Revendications**

1. Système de meulage (100, 200, 300, 400) comprenant :

   une meule (2, T) qui meule une pièce à usiner (80, W) ;
   un mécanisme d'entraînement (3) qui entraîne en rotation la meule (2, T) ;
   un mécanisme de déplacement (41, 51) qui déplace relativement la pièce à usiner (80, W) et la meule (2, T) ;
   un organe de commande (6, 212) qui commande le mécanisme d'entraînement (3) et le mécanisme de déplacement (41, 51) ; **caractérisé par** :
   une unité d'actionnement (61, 220) qui détermine l'occurrence d'une brûlure de meulage sur la pièce à usiner (80, W) sur la base d'une valeur de mesure d'un capteur de flux de chaleur (7, 7A, 7B, 213d) qui mesure un flux de chaleur rayonné à partir d'une surface d'au moins l'une parmi la meule (2, T) et la pièce à usiner (80, W) lorsque la chaleur est générée sur un point de meulage (P, Pa) où la meule (2, T) vient en contact avec la pièce à usiner (80, W).

2. Système de meulage selon la revendication 1, dans lequel l'organe de commande (6, 212) modifie les conditions de meulage lorsque l'on détermine que la brûlure de meulage a eu lieu.

3. Système de meulage selon la revendication 1 ou 2, dans lequel le capteur de flux de chaleur (7, 213d) est prévu dans une position faisant face à une surface périphérique externe de la meule (2, T).

4. Système de meulage selon la revendication 1 ou 2, dans lequel le capteur de flux de chaleur (7A) est prévu dans une position faisant face à une surface périphérique externe (80a) de la pièce à usiner (80, W).

5. Système de meulage selon la revendication 1 ou 2, dans lequel le capteur de flux de chaleur (7B) est prévu dans une position faisant face à une face d'extrémité (21) dans une direction d'axe de rotation de la meule (T).

6. Système de meulage selon la revendication 1, comprenant :

   un corps principal de meuleuse (211) configuré pour comprendre la meule (T), le mécanisme d'entraînement (3) et le mécanisme de déplacement (41, 51) et meulant la pièce à usiner (W) grâce à la meule (T) ; et
   un détecteur (213) qui mesure les données d'état d'usinage observables dans le corps principal de meuleuse (211) pendant le meulage de la pièce à usiner (W),
   dans lequel l'unité d'actionnement (220) comprend une unité de prédiction (273, 373, 473) qui prédit un état de brûlure de meulage en utilisant les données d'état d'usinage mesurées par le détecteur (213), et
   le détecteur (213) comprend le capteur de flux de chaleur (213d) qui mesure, en tant que données d'état d'usinage, des données de flux de chaleur rayonné à partir d'une position différente du point de meulage (Pa) sur une surface d'au moins l'une parmi la meule (T) et la pièce à usiner (W).

7. Système de meulage selon la revendication 6, comprenant en outre :

   un dispositif de traitement d'apprentissage (260, 460) qui génère un modèle appris en réalisant l'apprentissage automatique à l'aide d'un ensemble de données d'apprentissage comprenant une variable explicative et une variable cible, dans lequel la variable explicative est les données d'état d'usinage mesurées par le détecteur (213a-213g), et la variable cible est les données représentant l'état de brûlure de meulage généré sur la pièce à usiner (W) ; et
   une unité de stockage de modèle (271, 471) qui stocke le modèle appris généré par le dispositif de traitement d'apprentissage (260, 460),

dans lequel l'unité de prédiction (273, 473) prédit l'état de brûlure de meulage en utilisant le modèle appris et les données d'état d'usinage.

8. Système de meulage selon la revendication 6 ou 7, dans lequel l'unité de prédiction (273, 473) prédit la présence ou l'absence de la brûlure de meulage en tant qu'état de brûlure de meulage.

9. Système de meulage selon l'une quelconque des revendications 6 à 8, dans lequel l'unité de prédiction (273, 473) prédit, en tant qu'état de brûlure de meulage, si un degré de génération de la brûlure de meulage est égal ou supérieur à une valeur de seuil prédéterminée.

10. Système de meulage selon l'une quelconque des revendications 6 à 9, dans lequel l'unité de prédiction (273, 473) prédit une profondeur de la brûlure de meulage en tant qu'état de brûlure de meulage.

11. Système de meulage selon l'une quelconque des revendications 6 à 10, dans lequel le capteur de flux de chaleur (213d) est agencé afin de faire face à une position différente du point de meulage (Pa) sur une surface périphérique externe d'au moins l'une parmi la meule (T) et la pièce à usiner (W).

12. Système de meulage selon la revendication 11, dans lequel le corps principal de meuleuse (211) réalise le meulage tout en fournissant un réfrigérant à partir d'une position au-dessus du point de meulage (Pa) vers le point de meulage (Pa), et

le capteur de flux de chaleur (213d) est agencé pour faire face à une position au-dessus du point de meulage (Pa) sur la surface périphérique externe d'au moins l'une parmi la meule (T) et la pièce à usiner (W).

13. Système de meulage selon la revendication 12, dans lequel une direction de rotation de la meule (T) est une direction dans laquelle une position prédéterminée sur une surface de la meule (T) est déplacée dans l'ordre d'un côté de la meule (T) qui est le point de meulage (Pa), une extrémité inférieure (Pb), une extrémité supérieure (Pc) et le point de meulage (Pa), et

le capteur de flux de chaleur (213d) est agencé afin de faire face à une position au-dessus du point de meulage (Pa) sur la surface périphérique externe de la meule (T).

14. Système de meulage selon la revendication 13, dans lequel le capteur de flux de chaleur (213d) est agencé afin de faire face à une position entre le point de meulage (Pa) et l'extrémité supérieure (Tc) de la meule (T) sur la surface périphérique externe de la meule (T).

15. Système de meulage selon la revendication 12, dans lequel une direction de rotation de la pièce à usiner (W) est une direction dans laquelle une position prédéterminée sur une surface de la pièce à usiner (W) est déplacée dans l'ordre d'un côté de la pièce à usiner (W) qui est le point de meulage (Pa), une extrémité inférieure (Pd), une extrémité supérieure (Pe), et le point de meulage (Pa), et

le capteur de flux de chaleur (213d) est agencé afin de faire face à une position au-dessus du point de meulage (Pa) sur la surface périphérique externe de la pièce à usiner (W).

16. Système de meulage selon la revendication 7, dans lequel le dispositif de traitement d'apprentissage (260, 460) :

réalise l'apprentissage automatique en utilisant un premier ensemble de données d'apprentissage comprenant une première variable explicative et une première variable cible, et extrait une caractéristique effective ayant un degré élevé d'influence sur la première variable cible d'une pluralité de caractéristiques, la pluralité de caractéristiques concernant les données d'état d'usinage sont utilisées en tant que première variable explicative, et les données représentant l'état de brûlure de meulage sont utilisées en tant que première variable cible ; et génère le modèle appris en réalisant l'apprentissage automatique en utilisant un second ensemble de données d'apprentissage comprenant une seconde variable explicative et une seconde variable cible, la caractéristique effective extraite est la seconde variable explicative, et les données représentant l'état de brûlure de meulage est la seconde variable cible, et l'unité de prédiction (273, 473) prédit l'état de brûlure de meulage en utilisant le modèle appris et la caractéristique effective concernant les données d'état d'usinage.

17. Système de meulage selon la revendication 6, comprenant en outre une unité de stockage de données relationnelles (371) qui stocke des données relationnelles entre les données de flux de chaleur et la profondeur de la brûlure de meulage, dans lequel :
l'unité de prédiction (373) prédit la profondeur de la brûlure de meulage en calculant, dans les données relationnelles, la profondeur de la brûlure de meulage correspondant aux données de flux de chaleur.

18. Système de meulage selon la revendication 17, dans lequel l'unité de stockage de données relationnelles (371) stocke des données relationnelles entre une pluralité de caractéristiques concernant les données de flux de chaleur et la profondeur de la brûlure de meulage, et

l'unité de prédiction (373) prédit la profondeur de la brûlure de meulage en calculant, dans les données relationnelles, la profondeur de la brûlure de meulage correspondant à une pluralité de caractéristiques concernant les données de flux de chaleur.

19. Système de meulage selon l'une quelconque des revendications 6 à 16, dans lequel le détecteur (213) comprend au moins l'un parmi :

   un capteur de puissance de rotation (213a, 213c) qui mesure, en tant que données d'état d'usinage, des données de puissance de rotation d'au moins l'une parmi la meule (T) et la pièce à usiner (W) ;
   un capteur de puissance d'arbre (213b) qui mesure, en tant que données d'état d'usinage, des données de puissance d'arbre pour déplacer axialement la meule et la pièce à usiner dans la direction de coupe ;
   un capteur de son d'usinage (213g) qui mesure des données sonores générées par l'usinage par meulage en tant que données d'état d'usinage ; et
   un capteur de vibration (213e, 213f) qui mesure, en tant que données d'état d'usinage, des données de vibration générées dans une partie de support supportant au moins l'une parmi la meule (T) et la pièce à usiner (W).

20. Système de meulage selon l'une quelconque des revendications 6 à 19, comprenant en outre une unité de post-traitement de pièce à usiner (275, 375) qui réalise une action quelconque parmi la sélection, le dépôt et l'inspection détaillée de la pièce à usiner (W) selon l'état de brûlure de meulage prédit par l'unité de prédiction (273, 373, 473).

21. Système de meulage selon l'une quelconque des revendications 6 à 20, comprenant une unité de traitement d'amélioration (276, 376) qui modifie les conditions d'usinage par meulage ou réalise le dressage de la meule (T) selon l'état de brûlure de meulage prédit par l'unité de prédiction (273, 373, 473).

22. Système de meulage selon la revendication 7, dans lequel le dispositif de traitement d'apprentissage (260, 460) génère le modèle appris avec, en plus de l'état de brûlure de meulage, au moins l'une parmi des données d'état de broutage générées sur la pièce à usiner (W), des données de rondeur et des données de rugosité de surface en tant que variable cible, et

l'unité de prédiction (273, 473) prédit l'état de brûlure de meulage en utilisant le modèle appris et les données d'état d'usinage, et prédit également au moins l'un parmi l'état de broutage, la rondeur et la rugosité de surface générée dans la pièce à usiner (W).

# Fig. 1

# Fig. 2A

# Fig. 2B

# Fig. 3

# Fig. 4

# Fig. 5A

Heat Flow  Q

Temperature  $T_1$

Temperature  $T_2$

# Fig. 5B

# Fig. 6

# Fig. 7

# Fig. 8

# Fig. 9

# Fig. 10

# Fig. 11

# Fig. 12

200

**220**

**Learning Processing Device**

**260**

Training Data Set Acquisition Unit ⟋ 261

213a-213g

| Detector |

250

| Machining Quality Inspection Device |

**261a**
| Machining State Data Acquisition Unit |

**261b**
| Feature Calculation Unit |

**261c**
| Machining Quality Data Acquisition Unit |

**262**
| Training Data Set Storage Unit |

**264**
| Effective Feature Extraction Unit |

**263**
| Model Generation Unit |

**Predictive Operation Device**

**270**

**271**
| Model Storage Unit |

Prediction Data Acquisition Unit

**272**

**272a**
| Machining State Data Acquisition Unit |

**272b**
| Effective Feature Calculation Unit |

**273**
| Prediction Unit |

**274**
| Display Output Unit |

**275**
| Workpiece Post-Processing Unit |

**276**
| Improvement Processing Unit |

**230**
| Display Device |

**280**
| Post-Processing Device |

**212**
| Controller |

# Fig. 13

| Detector | Explanatory Variable Input Data | Learned Model | Output Data Target Variable |
|---|---|---|---|
| Rotational Power Sensor 213a | Rotational Power Data | Learned Model A | Grinding Burn State Data |
| Shaft Power Sensor 213b | Shaft Power Data | Learned Model B | Chattering State Data |
| Rotational Power Sensor 213c | Rotational Power Data | Learned Model C | Roundness Data |
| Heat Flow Sensor 213d | Heat Flow Data | Learned Model D | Surface Roughness Data |
| Vibration Sensor 213e | Vibration Data | | |
| Vibration Sensor 213f | Vibration Data | | |
| Machining Sound Sensor 213g | Sound Data | | |

EP 3 815 842 B1

# Fig. 14

# Fig. 15

# Fig. 16

# Fig. 17

Heat Flux by Heat Flow Sensor $(W/m^2)$

# Fig. 18

400

220

Learning Processing Device

460

Training Data Set Acquisition Unit 461

213a-213g

Detector

461a
Machining State Data Acquisition Unit

461b
Feature Calculation Unit

250
Machining Quality Inspection Device

361c
Grinding Burn Depth Data Acquisition Unit

462
Training Data Set Storage Unit

463
Model Generation Unit

Predictive Operation Device

470

471
Model Storage Unit

Prediction Data Acquisition Unit 472

472a
Machining State Data Acquisition Unit

472b
Feature Calculation Unit

473
Prediction Unit

374
Display Output Unit

375
Workpiece Post-Processing Unit

376
Improvement Processing Unit

230
Display Device

280
Post-Processing Device

212
Controller

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010194641 A